# EUROPÄISCHE PATENTSCHRIFT

(11) **EP 2 864 016 B1**
(45) Veröffentlichungstag und Bekanntmachung des Hinweises auf die Patenterteilung: **16.05.2018**
(21) Anmeldenummer: 13739366.6
(22) Anmeldetag: 21.06.2013
(51) Int. Cl.: B01D 35/30, B01D 29/01, F01M 11/03, F02M 37/22, B01D 35/153, B01D 35/147, B01D 35/16

(54) **FLÜSSIGKEITSFILTER MIT EINEM FILTERUMGEHUNGSVENTIL UND EINEM ZENTRALEN ABLASSKANAL UND FILTEREINSATZ FÜR EINEN FLÜSSIGKEITSFILTER**
LIQUID FILTER WITH A FILTER BYPASS VALVE AND WITH A CENTRAL DISCHARGE DUCT, AND FILTER INSERT FOR A LIQUID FILTER
FILTRE À LIQUIDE POURVU D'UNE SOUPAPE DE CONTOURNEMENT DE FILTRE ET D'UN CANAL D'ÉVACUATION CENTRAL, ET ÉLÉMENT FILTRANT POUR UN FILTRE À LIQUIDE

(30) Priorität: 26.06.2012 DE 102012210834
(43) Veröffentlichungstag der Anmeldung: 29.04.2015
(73) Patentinhaber: Hengst SE, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2013/062968
(87) Internationale Veröffentlichungsnummer: WO 2014/001210

(56) Entgegenhaltungen:
- WO-A1-2008/009324
- WO-A1-2009/094437
- WO-A2-2008/134494
- WO-A2-2009/132291
- DE-A1- 19 859 960
- DE-U1- 20 118 683
- DE-U1-202007 017 979
- US-A1- 2008 053 886
- US-B1- 6 569 326
- US-B1- 6 685 829

## Beschreibung

Die vorliegende Erfindung betrifft einen Flüssigkeitsfilter, insbesondere einen Ölfilter einer Brennkraftmaschine, mit einem Filtergehäuse mit einem abnehmbaren Deckel und mit einem Rohflüssigkeitseinlass und einem Reinflüssigkeitsauslass, mit einem im Filtergehäuse auswechselbar angeordneten, eine Rohseite und eine Reinseite des Flüssigkeitsfilters voneinander trennenden Filtereinsatz mit einem stirnseitig von zwei Endscheiben eingefassten hohlzylindrischen Filterstoffkörper, wobei die im Einbauzustand untere Endscheibe eine zentrale Aufstecköffnung aufweist, wobei der Flüssigkeitsfilter ein Filterumgehungsventil aufweist, wofür die im Einbauzustand obere Endscheibe unterseitig einen mit einem Ventilkörper zusammenwirkenden zentralen Ventilsitz aufweist, wobei das Filtergehäuse weiter einen zentralen Ablasskanal zum Entleeren des Filtergehäuses bei einem Entnehmen des Filtereinsatzes aufweist und wobei in dem Ablasskanal ein im Einbauzustand gehäusefester Verschlusszapfen angeordnet ist, der zwischen einer bei eingebautem Filtereinsatz und geschlossenem Deckel eingenommenen Schließstellung und einer bei abgenommenem Deckel und entnommenem Filtereinsatz eingenommenen Öffnungsstellung axial verstellbar ist. Außerdem betrifft die Erfindung einen Filtereinsatz für einen Flüssigkeitsfilter.

Ein Flüssigkeitsfilter der vorstehend angegebenen Art ist aus DE 201 18 683 U1 und WO 2009/094437 bekannt. Bei diesem bekannten Flüssigkeitsfilter erstreckt sich der Verschlusszapfen vom Ablasskanal aus nach oben in den Filtereinsatz bis zu dessen oberer Stirnscheibe. Am oberen Ende des Verschlusszapfens ist ein relativ zu diesem axial verschiebbarer Ventilkörper des Filterumgehungsventils angeordnet und mittels einer am Verschlusszapfen abgestützten Feder mit einer nach oben, d.h. in Schließrichtung des Filterumgehungsventils, wirkenden Kraft beaufschlagt. Eine weitere Feder ist zwischen dem Filtergehäuse und einem unteren Teil des Verschlusszapfens angeordnet, die den Verschlusszapfen mit einer nach oben, d.h. in Richtung zum Deckel des Filtergehäuses, wirkenden Kraft beaufschlagt.

Als nachteilig wird bei diesem Stand der Technik angesehen, dass relativ viele Bauteile, insbesondere zwei verschiedene Federn, benötigt werden, was zu einem entsprechend hohen Fertigungs- und Montageaufwand führt. Außerdem kann bei diesem bekannten Flüssigkeitsfilter der Einsatz von Fremdfiltereinsätzen nicht wirksam verhindert werden.

Für die vorliegende Erfindung stellt sich daher die Aufgabe, einen Flüssigkeitsfilter der eingangs genannten Art zu schaffen, der die angegebenen Nachteile vermeidet und der insbesondere eine geringere Zahl von Einzelteilen benötigt und dadurch kostengünstiger gefertigt und montiert werden kann. Außerdem soll ein passender, spezifischer Filtereinsatz für den erfindungsgemäßen Flüssigkeitsfilter geschaffen werden.

Die Lösung des ersten, den Flüssigkeitsfilter betreffenden Teils dieser Aufgabe gelingt erfindungsgemäß mit einem Flüssigkeitsfilter der eingangs genannten Art, der dadurch gekennzeichnet ist,
- dass mit dem Verschlusszapfen axial begrenzt verschiebbar ein durch den Filtereinsatz verlaufender Ventilkörperträger verbunden ist, der einen Ventilkörper des Filterumgehungsventils an seinem freien Ende aufweist und auf den der Filtereinsatz mit seiner die Aufstecköffnung aufweisenden Endscheibe voran aufsteckbar ist,
- dass der Ventilkörperträger mit einer in Schließrichtung des Filterumgehungsventils wirkenden Kraft einer am Filtergehäuse abgestützten Feder vorbelastet ist und
- dass von dem Filtereinsatz bei oder bei und nach seinem Aufstecken auf den Ventilkörperträger eine in Richtung zur Schließstellung des Verschlusszapfens wirkende Kraft unmittelbar auf den Verschlusszapfen ausübbar ist.

Mit der Erfindung wird vorteilhaft erreicht, dass die gewünschten Funktionen von Filterumgehungsventil und Ablasskanal mit nur einer einzigen Feder realisiert werden können, ohne dass dabei eine Beeinträchtigung der Funktion oder Betriebssicherheit des Flüssigkeitsfilters verbunden wäre. Dadurch werden der Aufwand bei der Fertigung der Einzelteile und bei der Montage des Flüssigkeitsfilters und so insgesamt dessen Kosten vermindert. Zugleich ist der erfindungsgemäße Flüssigkeitsfilter robust und unempfindlich gegen Beschädigungsgefahren, die bei möglicherweise unsachgemäßer Wartung auftreten können, denn der Verschlusszapfen liegt gut geschützt innerhalb des Ablasskanals und nur der mit dem Verschlusszapfen verbundene Ventilkörperträger verläuft durch den Filtereinsatz.

Zur weiteren Förderung einer kostengünstigen Fertigung und Montage und guten Haltbarkeit ist bevorzugt vorgesehen, dass der Ventilkörperträger und der Ventilkörper des Filterumgehungsventils einstückig ausgebildet sind.

Im Sinne einer kompakten Bauweise und hohen funktionalen Zuverlässigkeit ist weiter bevorzugt vorgesehen, dass der Verschlusszapfen in seinem oberen Endbereich zwei oder mehr über den Umfang verteilte, radial nach außen über den Außenumfang des Ventilkörperträgers vorstehende Schubnasen aufweist, auf die vom Filtereinsatz die in Richtung zur Schließstellung des Verschlusszapfens wirkende Schubkraft ausübbar ist.

Zweckmäßig sind der Verschlusszapfen und der Ventilkörperträger relativ zueinander unverdrehbar geführt, was vorteilhaft für eine exakte gegenseitige axiale Führung ist.

In einer bevorzugten Weiterbildung des Flüssigkeitsfilters wird vorgeschlagen, dass an der unteren Endscheibe oder an einem Stützgitter des Filtereinsatzes Betätigungselemente für die Schubnasen angeordnet sind. Die Betätigungselemente können hier einfach angeformt, stabil ausgeführt und platzsparend untergebracht werden.

Bevorzugt ist dabei vorgesehen, dass die Betätigungselemente durch zwei oder mehr radial nach innen vorragende, axial verlaufende Rippen oder durch eine Zahnanordnung mit mehreren radial nach innen vorragenden, axial verlaufenden Zähnen gebildet sind. Hiermit werden eine stabile und schadensunanfällige Gestaltung und eine räumlich günstige Unterbringung erzielt.

Weiter ist vorgesehen, dass am Innenumfang des Filtereinsatzes und am Außenumfang des Ventilkörperträgers zusammenwirkende Positionierführungsmittel angeordnet sind, mit denen der Filtereinsatz bei seinem Aufstecken auf den Ventilkörperträger in Umfangsrichtung in eine eingriffsgerechte Position seiner Betätigungselemente relativ zu den Schubnasen zwangsführbar ist. In dieser Ausführung wird eine besonders zuverlässige Funktion gewährleistet. Außerdem kann hiermit ein Schlüssel-Schloss-System realisiert werden, welches den Einsatz von unpassenden, die Positionierführungsmittel und Betätigungselemente nicht aufweisenden Fremdfiltereinsätzen verhindert.

Zwecks Erzielung einer einfachen Bauweise sind bevorzugt die Betätigungselemente für die Schubnasen mit den am Filtereinsatz vorgesehenen Positionierführungsmitteln identisch.

Im Sinne einer kompakten Anordnung der Einzelteile ist zweckmäßig als Feder zwischen dem unteren Ende des Ventilkörperträgers und dem Filtergehäuse eine den Verschlusszapfen umgebende Schraubendruckfeder angeordnet.

Zur Erleichterung des Einbaus der Feder in den Ablasskanal des Flüssigkeitsfilters schlägt die Erfindung vor, dass am Außenumfang des Ventilkörperträgers mehrere nach außen weisende Haltenocken vorgesehen sind, die bei entspannter Feder in Eingriff mit dieser und bei zumindest teilweise zusammengedrückter Feder außer Eingriff mit dieser stehen. Da die Feder im eingebauten Zustand immer mehr oder weniger zusammengedrückt ist, hat sie in diesem Zustand keinen Eingriff mit dem Ventilkörperträger mehr und übt somit auf diesen im eingebauten Zustand auch keine unmittelbare Kraftwirkung aus.

Zur Gewährleistung einer sicheren und gegen Beschädigungen und Verlust unempfindlichen Halterung des Ventilkörperträgers im Filtergehäuse wird vorgeschlagen, dass der Ventilkörperträger mit einem unteren Abschnitt im Filtergehäuse axial verschiebbar geführt ist und dass der Verschiebeweg des Ventilkörperträgers in Ausschubrichtung relativ zum Filtergehäuse durch eine federnde Sperrnasenanordnung begrenzt ist.

Damit bei einer Filterwartung mit einem Wechsel des verschmutzten Filtereinsatzes dieser nicht unmittelbar ergriffen werden muss, wird vorgeschlagen, dass der Deckel an seiner Unterseite und die obere Endscheibe des Filtereinsatzes an ihrer Oberseite zusammenwirkende, relativ zueinander verdrehbare, lösbare erste Rastverbindungsmittel aufweisen, mit denen eine vorgebbare erste Zugkraft in Axialrichtung übertragbar ist. Bei einem Abnehmen des Deckels vom Filtergehäuse wird auf diese Weise der mit dem Deckel verrastete Filtereinsatz mit aus dem Filtergehäuse entnommen.

Weiter ist vorgesehen, dass der Filtereinsatz einerseits und der Ventilkörperträger oder der Verschlusszapfen andererseits zusammenwirkende, lösbare zweite Rastverbindungsmittel aufweisen, mit denen eine vorgebbare zweite Zugkraft, die kleiner als die erste Zugkraft ist, in Axialrichtung übertragbar ist. Diese zweiten Rastverbindungsmittel dienen dazu, vor einer Erstmontage des Flüssigkeitsfilters den Ventilkörperträger und den Verschlusszapfen gegen ein unbeabsichtigtes Verlieren ausreichend gesichert am Filtereinsatz zu halten, ohne dass diese zweiten Rastverbindungsmittel das spätere Entnehmen des Filtereinsatzes zusammen mit dem damit verrasteten Deckel bei der im vorherigen Absatz beschriebenen Filterwartung behindern.

Im Sinne einer zuverlässigen Dichtwirkung bei geringem Kostenaufwand ist bevorzugt eine oder jede am Verschlusszapfen vorgesehene Dichtung eine radial dichtende Dichtung, vorzugsweise ein Dichtring, weiter vorzugsweise ein O-Ring. Derartige Dichtungen sind in sehr vielen verschiedenen Ausführungen marktgängig und kostengünstig verfügbar.

Der Flüssigkeitsfilter nach der Erfindung kann als Einzelkomponente ausgeführt und beispielsweise als Ölfilter mit dem Motorblock einer Brennkraftmaschine verbunden sein. Für diese Ausführung als Einzelkomponente ist bevorzugt vorgesehen, dass der Verschlusszapfen in seinem unteren, mit dem Ablasskanal zusammenwirkenden Teil eine radial dichtende Dichtung aufweist und dass der Ablasskanal in seinem mit der Dichtung bei der axialen Bewegung des Verschlusszapfens zusammenwirkenden Bereich zwei Abschnitte mit unterschiedlichem, von unten nach oben gestuft größer werdendem Innendurchmesser hat, wobei sich die Dichtung frei in dem Abschnitt mit dem größeren Innendurchmesser in der Öffnungsstellung und dichtend in dem Abschnitt mit dem kleineren Innendurchmesser in der Schließstellung des Verschlusszapfens befindet.

Alternativ kann der Flüssigkeitsfilter nach der Erfindung auch Teil eines Funktionsmoduls mit mehreren Komponenten sein. Hierzu schlägt die Erfindung vor, dass mit dem Flüssigkeitsfilter ein Wärmetauscher für die das Flüssigkeitsfilter durchströmende Flüssigkeit verbunden oder verbindbar ist, dass der Verschlusszapfen in seinem unteren, mit dem Ablasskanal zusammenwirkenden Teil zwei axial beabstandete radial dichtende Dichtungen unterschiedlichen Durchmessers aufweist und dass der Ablasskanal in seinem mit den Dichtungen bei der axialen Bewegung des Verschlusszapfens zusammenwirkenden Bereich zwei Abschnitte mit unterschiedlichem, von unten nach oben gestuft größer werdendem Innendurchmesser hat, wobei sich die Dichtung mit dem kleineren Durchmesser dichtend in dem Abschnitt mit dem kleineren Innendurchmesser in der Schließstellung und offen in dem Abschnitt mit dem größeren Innendurchmesser in der Öffnungsstellung des Verschlusszapfens befindet, wobei sich die Dichtung mit dem größeren Durchmesser immer dichtend in dem Abschnitt mit dem größeren Innendurchmesser befindet und wobei ein erster Verbindungskanal zwischen Flüssigkeitsfilter und Wärmetauscher oberhalb der Dichtung mit dem größeren Durchmesser vom Ablasskanal abgeht und ein zweiter Verbindungskanal zwischen Wärmetauscher und Flüssigkeitsfilter zwischen den beiden Dichtungen in den Ablasskanal mündet. Hiermit wird erreicht, dass bei einer Filterwartung sowohl das Filtergehäuse als auch ein an dieses angeschlossener Wärmetauscher, insbesondere Ölkühler, von Flüssigkeit entleert wird, wobei der Weg der aus dem Filtergehäuse abströmenden Flüssigkeit durch den Wärmetauscher verläuft.

Eine dazu alternative Ausführung schlägt vor, dass mit dem Flüssigkeitsfilter ein Wärmetauscher für die das Flüssigkeitsfilter durchströmende Flüssigkeit verbunden oder verbindbar ist, dass der Verschlusszapfen in seinem unteren, mit dem Ablasskanal zusammenwirkenden Teil zwei axial beabstandete radial dichtende Dichtungen unterschiedlichen Durchmessers aufweist und dass der Ablasskanal in seinem mit den Dichtungen bei der axialen Bewegung des Verschlusszapfens zusammenwirkenden Bereich drei Abschnitte mit unterschiedlichem, von unten nach oben gestuft größer werdendem Innendurchmesser hat, wobei sich die Dichtung mit dem kleineren Durchmesser dichtend in dem Abschnitt mit dem kleinsten Innendurchmesser in der Schließstellung und offen in dem Abschnitt mit dem mittleren Innendurchmesser in der Öffnungsstellung des Verschlusszapfens befindet, wobei sich die Dichtung mit dem größeren Durchmesser dichtend in dem Abschnitt mit dem mittleren Innendurchmesser in der Schließstellung und offen in dem Abschnitt mit dem größten Innendurchmesser in der Öffnungsstellung des Verschlusszapfens befindet und wobei ein erster Verbindungskanal zwischen Flüssigkeitsfilter und Wärmetauscher oberhalb der Dichtung mit dem größeren Durchmesser vom Ablasskanal abgeht und ein zweiter Verbindungskanal zwischen Wärmetauscher und Flüssigkeitsfilter zwischen den beiden Dichtungen in den Ablasskanal mündet. In dieser Ausführung des Flüssigkeitsfilters kann bei einer Filterwartung die Flüssigkeit aus dem Filtergehäuse parallel durch den Wärmetauscher und an diesem vorbei unmittelbar durch den Ablasskanal abströmen, was die für das Entleeren des Filtergehäuses benötigte Zeit verkürzt.

Flüssigkeitsfilter werden heute in den meisten Fällen von Zulieferern ganz oder teilweise gefertigt und dann an Kunden geliefert, die die Flüssigkeitsfilter, ggf. nach einem Komplettieren, verbauen. Häufig stellt der Kunde das Filtergehäuse und der Zulieferer liefert alle weiteren Teile des Flüssigkeitsfilters zu. Um dem Kunden die Komplettierung und abschließende Montage des Flüssigkeitsfilters möglichst einfach zu machen, ist erfindungsgemäß vorgesehen, dass der Flüssigkeitsfilter aus dem Filtergehäuse einerseits und einer vormontierten Baugruppe andererseits bei seiner Erstmontage zusammenbaubar ist, wobei die vormontierte Baugruppe den Verschlusszapfen, den Ventilkörperträger, die Feder, den Filtereinsatz und den Deckel umfasst. Hiermit wird erreicht, dass keinerlei lose Einzelteile geliefert und verbaut werden müssen; der Kunde muss nur noch die vormontierte Baugruppe in das Filtergehäuse einführen und den Deckel mit dem Gehäuse verbinden, üblicherweise verschrauben. Danach ist der Flüssigkeitsfilter unmittelbar betriebsbereit.

Weiterhin betrifft die Erfindung einen Filtereinsatz für einen Flüssigkeitsfilter, insbesondere für einen Ölfilter einer Brennkraftmaschine, wobei der Filtereinsatz aus einem stirnseitig von zwei Endscheiben eingefassten hohlzylindrischen Filterstoffkörper besteht, wobei die im Einbauzustand untere Endscheibe eine zentrale Aufstecköffnung zum Aufstecken des Filtereinsatzes auf einen zentralen Ventilkörperträger des Flüssigkeitsfilters aufweist.

Zur Lösung des zweiten, den Filtereinsatz betreffenden Teils der Aufgabe wird ein Filtereinsatz vorgeschlagen, der dadurch gekennzeichnet ist,
- dass Betätigungselemente an dem Filtereinsatz angeordnet oder mit dem Filtereinsatz geführt sind, mittels welchen von dem Filtereinsatz eine in Richtung zur Schließstellung eines Ablasskanalverschlusszapfens des Flüssigkeitsfilters wirkende Kraft unmittelbar auf Schubnasen des Verschlusszapfens ausübbar ist, und
- dass am Innenumfang des Filtereinsatzes erste Positionierführungsmittel angeordnet sind, die zum Zusammenwirken mit am Außenumfang des Ventilkörperträgers angeordneten zweiten Positionierführungsmitteln ausgebildet sind, wobei mit den Positionierführungsmitteln der Filtereinsatz bei seinem Aufstecken auf den Ventilkörperträger in Umfangsrichtung in eine eingriffsgerechte Position seiner Betätigungselemente relativ zu den Schubnasen zwangsführbar ist.

Der erfindungsgemäße Filtereinsatz besitzt spezifische Elemente, die ihn nur zur Verwendung in einem Flüssigkeitsfilter mit den entsprechenden Gegenelementen verwendbar machen, so dass der Einsatz von ungeeigneten und unpassenden Fremdfiltereinsätzen auf diese Weise verhindert wird.

Bevorzugt sind dabei die Betätigungselemente an der unteren Endscheibe und/oder an einem zentralen Stützgitter des Filtereinsatzes angeordnet, wo sie zweckmäßig einstückig angeformt sind.

Konkret sind die Betätigungselemente vorzugsweise durch zwei oder mehr radial nach innen vorragende, axial verlaufende Rippen oder durch eine Zahnanordnung mit mehreren radial nach innen vorragenden, axial verlaufenden Zähnen gebildet.

Auch die ersten Positionierführungsmittel sind bevorzugt an der unteren Endscheibe und/ oder an einem zentralen Stützgitter des Filtereinsatzes angeordnet, zweckmäßig ebenfalls einstückig angeformt.

Vorteilhaft können die Betätigungselemente für die Schubnasen mit den am Filtereinsatz vorgesehenen ersten Positionierführungsmitteln identisch sein, was eine günstige Integration mehrerer Funktionen ergibt.

Alternativ können die Betätigungselemente für die Schubnasen einerseits und die am Filtereinsatz vorgesehenen ersten Positionierführungsmittel andererseits auch einzeln für sich ausgebildet sein, was eine individuelle Optimierung für den jeweiligen Zweck erleichtert.

Im Folgenden werden Ausführungsbeispiele der Erfindung anhand einer Zeichnung erläutert. Die Figuren der Zeichnung zeigen:
- Figur 1 bis Figur 21: ein erstes Ausführungsbeispiel in verschiedenen Darstellungen und verschiedenen Betriebszuständen,
- Figur 22 und 23: ein zweites Ausführungsbeispiel in zwei verschiedenen Betriebszuständen,
- Figur 24 und 25: ein drittes Ausführungsbeispiel in zwei verschiedenen Betriebszuständen,
- Figur 26 bis Figur 33: ein viertes Ausführungsbeispiel in verschiedenen Darstellungen und verschiedenen Betriebszuständen, und
- Figur 34 bis Figur 40: ein fünftes Ausführungsbeispiel in verschiedenen Darstellungen und verschiedenen Betriebszuständen.

In der folgenden Figurenbeschreibung werden gleiche Teile in den verschiedenen Figuren stets mit den gleichen Bezugsziffern bezeichnet, so dass nicht alle Bezugsziffern im Zusammenhang mit jeder Zeichnungsfigur neu erläutert werden müssen.

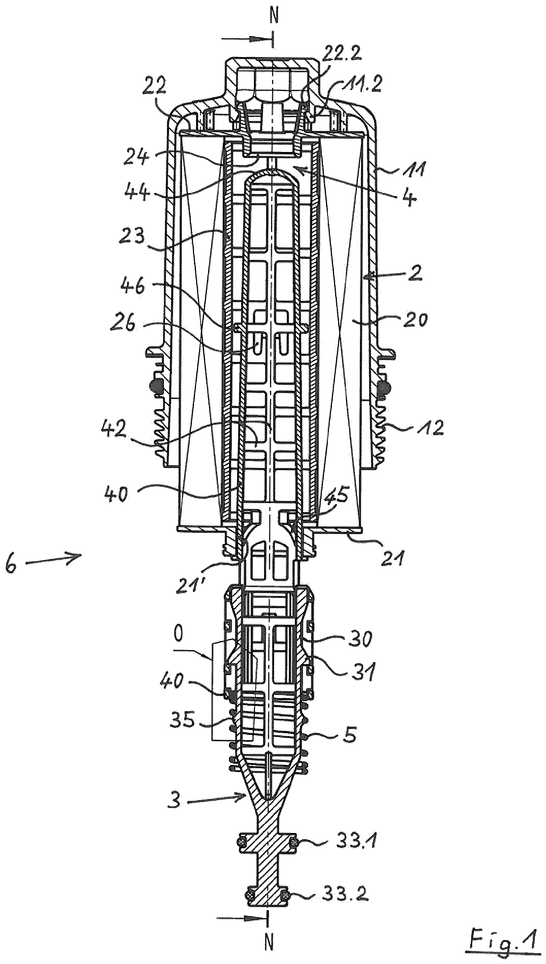

Die Figuren 1 bis 21 zeigen ein erstes Ausführungsbeispiel eines Flüssigkeitsfilters 1, wie Ölfilter einer Brennkraftmaschine.

In Figur 1 ist eine vormontierte Baueinheit 6 gezeigt, die aus einem Filtereinsatz 2, einem Schraubdeckel 11, einem Verschlusszapfen 3, einem Ventilkörperträger 40 und einer Schraubenfeder 5 besteht. Der Filtereinsatz 2 ist über Rastverbindungsmittel 11.2 und 22.2 mit dem Deckel 11 verrastet. Weiterhin ist der Filtereinsatz 2 über zweite Rastverbindungsmittel 26 und 46 mit dem Ventilkörperträger 40 verrastet. Der Verschlusszapfen 3 ist mit einem Führungsabschnitt 30 in einem unteren Abschnitt des Ventilkörperträgers 40 axial verschieblich geführt und in seinem Verschiebungsweg relativ zum Ventilkörperträger 40 durch Sperrzungen 31 begrenzt. Die Schraubenfeder 5 umgibt den Führungsabschnitt 30 des Verschlusszapfens 3 und ist an diesem mittels Haltenocken 35 gehalten, solange die Feder 5 entspannt ist und dadurch ihren kleinsten Innendurchmesser aufweist.

Der Filtereinsatz 2 besteht wie üblich aus einem Filterstoffkörper 22 und diesen stirnseitig einfassenden Endscheiben 21 und 22. Die untere Endscheibe 21 besitzt eine zentrale Aufstecköffnung 21', mit der voran der Filtereinsatz 2 auf den Ventilkörperträger 40 aufgesteckt ist. An der oberen Endscheibe 22 ist an deren nach unten weisender Seite ein Ventilsitz 24 für ein Filterumgehungsventil 4 einstückig angeformt. In Inneren des Filterstoffkörpers 20 ist ein Stützgitter 23 angeordnet, welches den Filterstoffkörper 20 im Filterbetrieb gegen ein Kollabieren schützt.

Der Ventilkörperträger 40 ist als länglicher gitterförmiger Körper aus Trägerstreben 42 ausgebildet, die in Umfangs- und Axialrichtung verlaufen. Am oberen Ende des Ventilkörperträgers 40 ist ein Ventilkörper 44 angeformt, der mit dem Ventilsitz 24 zusammen das Filterumgehungsventil 4 bildet. Ein unterer Abschnitt des Ventilkörperträgers 40 ragt nach unten aus dem Filtereinsatz 2 vor und bildet eine Führung für den Führungsabschnitt 30 des Verschlusszapfens 3. Im unteren Endbereich des Verschlusszapfens 3 sind an diesem zwei axial beabstandete, radial dichtende Dichtungen 33.1 mit einem größeren Durchmesser und 33.2 mit einem kleineren Durchmesser angeordnet.

Die in Figur 1 dargestellte vorgefertigte Baugruppe 6 kann beispielsweise von einem Zulieferer an den Hersteller von Brennkraftmaschinen geliefert werden, der seinerseits das zugehörige, in Figur 1 nicht dargestellte Filtergehäuse zur Verfügung stellt und die Baugruppe 6 in dieses einbaut.

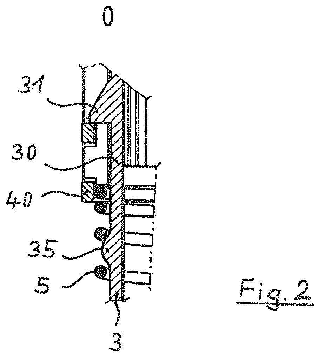

Figur 2 zeigt das Detail O aus Figur 1 in vergrößerter Darstellung. Hier ist die eine der Sperrzungen 31 des Verschlusszapfens 3 erkennbar, die an einem Teil des Ventilkörperträgers 40 anliegt. Um den Außenumfang des Führungsabschnitts 30 des Verschlusszapfens 3 herum verläuft die Feder 5 und wird mittels des Haltenockens 35 dort gehalten.

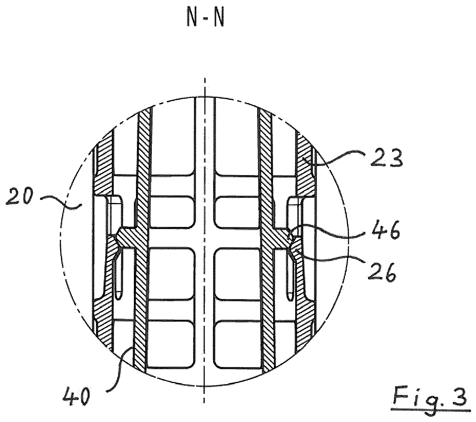

Figur 3 zeigt das Detail N - N in vergrößerter Darstellung. Im Zentrum ist der Ventilkörperträger 40 geschnitten sichtbar. An dessen Außenumfang liegt als radial vorspringender Wulst das zweite Rastverbindungsmittel 46, welches mit dem als Rastzunge ausgeführten zweiten Rastverbindungsmittel 26 des Filtereinsatzes 2 zusammenwirkt, welches Teil des Stützgitters 23 des Filtereinsatzes 2 ist.

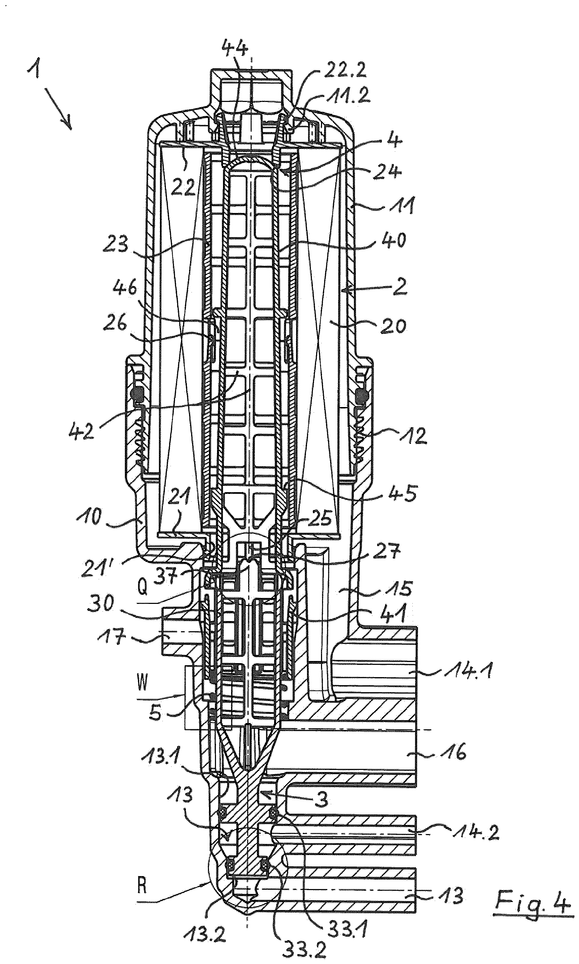

Figur 4 zeigt einen kompletten Flüssigkeitsfilter 1, bei dem die in Figur 1 gezeigte vormontierte Baugruppe in ein Filtergehäuse 10 vollständig eingebaut ist. Das Gehäuse 10 und der Deckel 11 sind mit einem zusammenwirkenden Schraubgewinde 12 ausgebildet, das in Figur 4 vollständig festgeschraubt ist. Der Filtereinsatz 2 ist über eigene Positionierführungsmittel 25 und Positionierführungsmittel 45 in Form von zwei aufeinander zu schräg von oben nach unten verlaufenden Schrägen am Ventilkörperträger 40 in Umfangsrichtung in eine bestimmte Position gebracht, in der Betätigungselemente 27 des Filtereinsatzes 2 in axialer Gegenüberstellung zu Schubnasen 37 des Verschlusszapfens 3 gelangen. Über die Betätigungselemente 27 wird auf die Schubnasen 37 eine Schubkraft ausgeübt, die den Verschlusszapfen 3 in seine in Figur 4 gezeigte Schließstellung im Filtergehäuse 10 bringt.

In seinem unteren Teil besitzt das Filtergehäuse 10 eine Anzahl von Kanälen, die der Zuführung und Abführung von Flüssigkeiten dienen. Über einen Rohflüssigkeitszulauf 15 wird ungefilterte Flüssigkeit auf die Rohseite des Flüssigkeitsfilters 1, die sich radial außen vom Filtereinsatz 2 befindet, geführt. In den Rohflüssigkeitszulauf 15 gelangt die Flüssigkeit hier über einen ersten Verbindungskanal 14.1, der den Flüssigkeitsfilter 1 mit einem nicht dargestellten Wärmetauscher, wie Ölkühler, verbindet. Über einen Reinflüssigkeitsablauf 16 verlässt gefilterte Flüssigkeit, die von der Reinseite des Flüssigkeitsfilters 1, also einem Bereich in Inneren des Filtereinsatzes 2, nach unten strömt, das Filtergehäuse 10.

Ganz unten im Filtergehäuse 10 befindet sich ein zentraler Ablasskanal 13, in dem die beiden Dichtungen 33.1 und 33.2 des Verschlusszapfens 3 liegen. Ein zweiter Verbindungskanal 14.2 verbindet den Wärmetauscher mit einem Bereich des zentralen Ablasskanals 13 zwischen den beiden Dichtungen 33.1 und 33.2.

Der zentrale Ablasskanal 13 besitzt zwei Abschnitte 13.1 mit einem größeren Durchmesser und 13.2 mit einem kleineren Durchmesser, in welchem die Dichtungen 33.1 und 33.2 in ihrer Dichtstellung, das heißt in Schließstellung des Verschlusszapfens 3, liegen. Damit ist der Ablasskanal 13 flüssigkeitsdicht verschlossen.

Im Betrieb des Flüssigkeitsfilters 1 sorgt der darin herrschende Flüssigkeitsdruck dafür, dass der Verschlusszapfen 3 in seiner untersten Stellung gehalten wird.

Die Feder 5 ist mit ihrem unteren Ende am Filtergehäuse 10 und mit ihrem oberen Ende an der Unterseite des Ventilkörperträgers 40 abgestützt und übt auf diesen eine nach oben gerichtete Kraft aus. Diese Kraft drückt den Ventilkörper 44 des Filterumgehungsventils 4 in seine Schließstellung gegen den Ventilsitz 24, solange eine Flüssigkeitsdruckdifferenz zwischen Rohseite und Reinseite unterhalb eines Grenzwertes bleibt. Innerhalb des Filtergehäuses 10 ist der Ventilkörperträger 40 axial begrenzt verschieblich geführt; eine Begrenzung des Verschiebungsweges nach oben wird durch eine federnde Sperrnasenanordnung 41 gebildet, die zwar ein Einsetzen des Ventilkörperträgers 40 von oben in eine entsprechende zentrale Ausnehmung des Filtergehäuses 10 erlaubt, jedoch ein Herausziehen des Ventilkörperträgers 40 aus dem Filtergehäuse 10 verhindert.

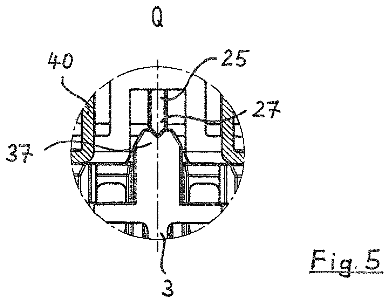

Figur 5 zeigt das Detail Q aus Figur 4 in vergrößerter Darstellung. Hier wird besonders deutlich sichtbar, dass das Betätigungselement 27 in Axialrichtung eine Schubkraft auf die Schubnase 37 des Verschlusszapfens 3 ausübt.

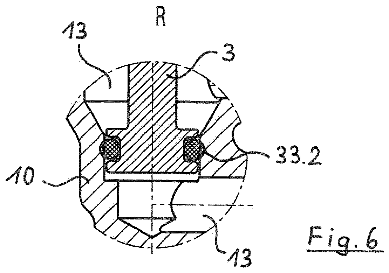

Figur 6 zeigt das Detail R aus Figur 4 in vergrößerter Darstellung, in der das Zusammenwirken der zweiten Dichtung 33.2 des Verschlusszapfens 3 mit dem Ablasskanal 13 im Filtergehäuse 10 deutlich wird. Die untere Stirnseite des Verschlusszapfens 3 hat noch einen geringen Abstand von einer Stufe im Filtergehäuse 10; durch Inbetriebnahme des Flüssigkeitsfilters entsteht oberhalb des Verschlusszapfens 3 ein Flüssigkeitsdruck, der dafür sorgt, dass der Verschlusszapfen 3 mit seiner unteren Stirnseite unterhalb der Dichtung 33.2 bis zum Anschlag an das Gehäuse 10 gelangt.

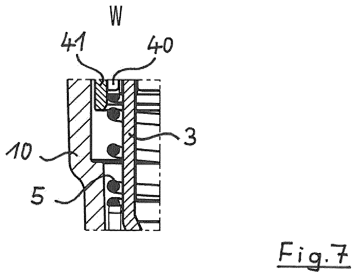

Figur 7 zeigt das Detail W aus Figur 4 in vergrößerter Darstellung. Hier ist insbesondere erkennbar, wie sich die Schraubenfeder 5 mit ihrer Unterseite am Filtergehäuse 10 und mit ihrer Oberseite am Ventilkörperträger 40 abstützt.

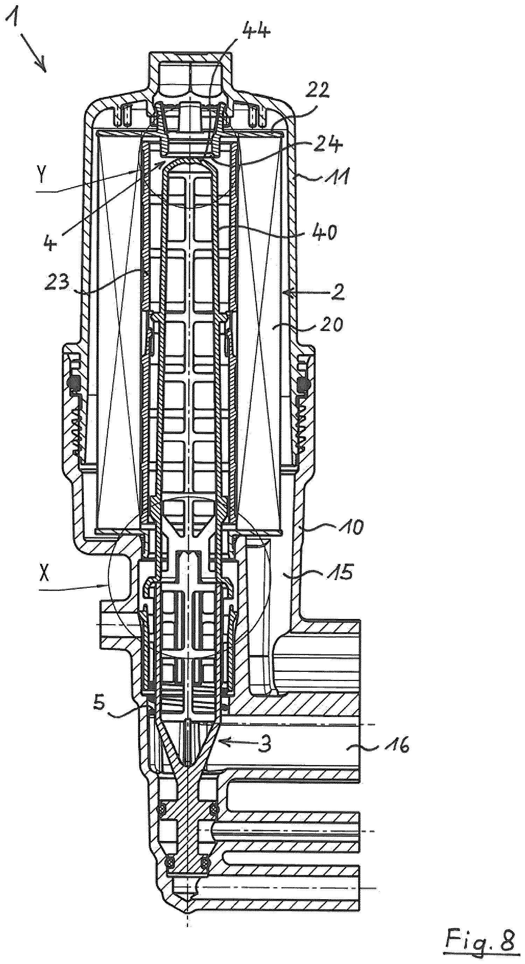

Figur 8 zeigt das zuvor beschriebene Flüssigkeitsfilter 1 nun in einem Zustand mit geöffneten Filterumgehungsventil 4. Diese Öffnungsstellung des Filterumgehungsventils 4 tritt auf, wenn zwischen der mit dem Rohflüssigkeitszulauf 15 verbundenen Rohseite und der mit dem Reinflüssigkeitsablauf 16 verbundenen Reinseite des Flüssigkeitsfilters 1 eine einen Grenzwert überschreitende Druckdifferenz entsteht, beispielsweise infolge einer Verstopfung des Filterstoffkörpers 20 mit abgefilterten Schmutzpartikeln. Die durch die Druckdifferenz erzeugte Kraft drückt auf die Oberseite des Ventilkörpers 44 und bewegt so den Ventilkörperträger 40 gegen die Kraft der Feder 5 in Öffnungsrichtung, das heißt nach unten. Auf diese Weise gelangt der Ventilkörper 44 in einen Abstand von seinem Ventilsitz 24 an der oberen Endscheibe 23 des Filtereinsatzes 2. Es wird nun ein unmittelbarer Strömungsweg von der Rohseite zur Reinseite des Flüssigkeitsfilters 13 frei. Während der Öffnungsbewegung des Ventilkörperträgers 40 mit dem Ventilkörper 44 behält der Verschlusszapfen 3 seine Stellung unverändert bei.

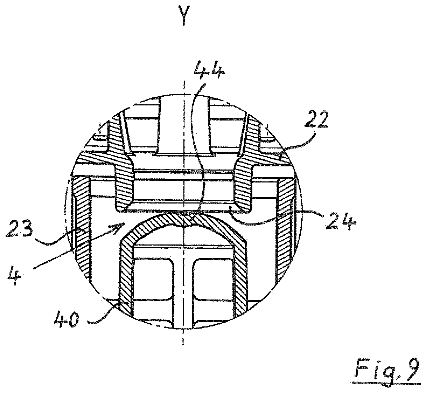

Figur 9 zeigt das Detail Y aus Figur 8, in welchem das offene Filterumgehungsventil 4 vergrößert dargestellt ist. Unten ist das obere Ende des Ventilkörperträgers 40 mit dem Ventilkörper 44 sichtbar. Oben in Figur 9 liegt die obere Endscheibe 22 des Filtereinsatzes 2 mit ihrem Ventilsitz 24. Der Ventilkörper 44 ist hier von dem Ventilsitz 24 weg bewegt und das Filterumgehungsventil 4 ist offen.

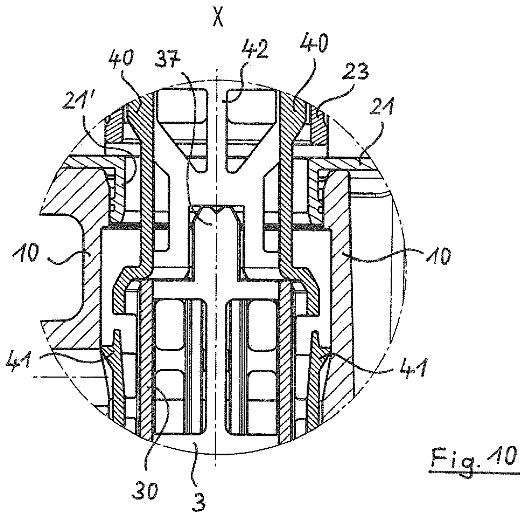

Figur 10 zeigt das Detail X aus Figur 8 in vergrößerter Darstellung. Links und rechts ist ein kleiner Teil des Filtergehäuses 10 erkennbar, in dessen zentrale Ausnehmung die untere Endscheibe 21 des Filtereinsatzes 2 dichtend eingesteckt ist. Zugleich ist der Filtereinsatz 2 mit der zentrale Aufstecköffnung 21' auf den von unten nach oben in den Filtereinsatz 2 hineinlaufenden Ventilkörperträger 40 aufgesteckt. Unten in Figur 10 ist der obere Teil des Führungsabschnitts 30 des Verschlusszapfens 3 sichtbar, dessen oberstes Ende durch die Schubnase 37 gebildet ist. Radial außerhalb des Führungsabschnitts 30 ist noch die Sperrnasenanordnung 41 des Ventilkörperträgers 40 sichtbar.

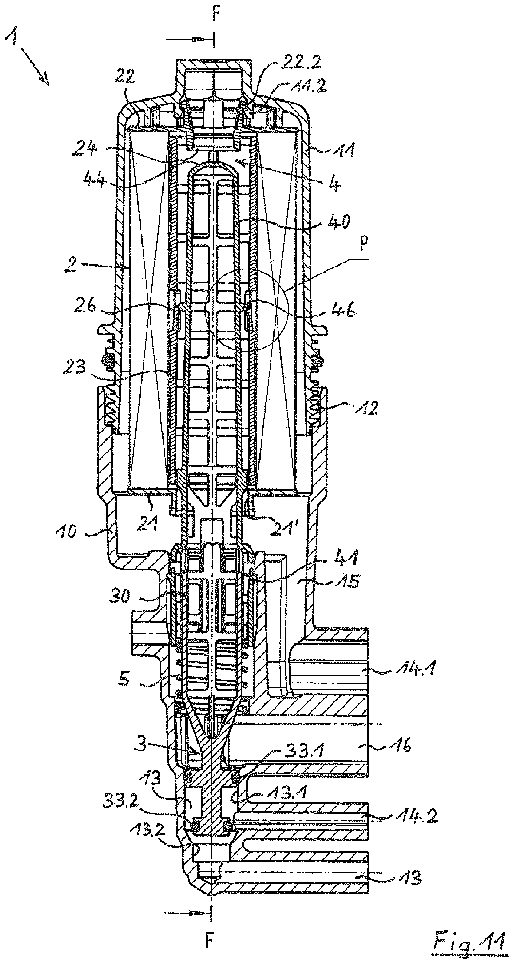

Figur 11 zeigt den Flüssigkeitsfilter 1 während einer Wartung, bei der der Deckel 11 vom Filtergehäuse 10 abgeschraubt wird. Dabei wird der Filtereinsatz 2 über die Rastverbindungsmittel 11.2 und 22.2 mit nach oben genommen.

Die Feder 5 schiebt den infolge des Abnehmens des Deckels 11 nun oberseitig axial entlasteten Ventilkörperträger 40 nach oben, bis dessen Sperrnasenanordnung 41 in Anlage an die zugehörige Stufe des Filtergehäuses 10 gelangt, wodurch ein weiteres Verschieben des Ventilkörperträgers 40 nach oben unterbunden ist. Über die anhand der Figuren 1 und 2 beschriebenen Sperrzungen 31, die in Figur 11 nicht sichtbar sind, wird der Verschlusszapfen 3 von dem Ventilkörperträger 40 mit nach oben bewegt. Hierdurch gelangt die untere Dichtung 33.2 aus dem Abschnitt 13.2 des Ablasskanals 13 mit dem kleineren Durchmesser in den Abschnitt 13.1 des Ablasskanals 13 mit dem größeren Durchmesser, wodurch die Dichtung 33.2 vom Filtergehäuse 10 frei kommt und nicht mehr dichtet. Die obere Dichtung 33.1 verbleibt innerhalb des Abschnitts 13.1 des Ablasskanals 13 mit dem größeren Durchmesser, dichtet also nach wie vor.

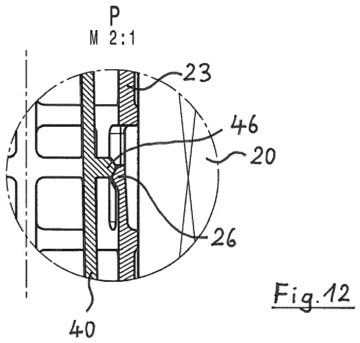

In Figur 12 ist das Detail P aus Figur 11 vergrößert dargestellt. Hier wird besonders das Zusammenwirken der zweiten Rastverbindungsmittel 26 und 46 deutlich.

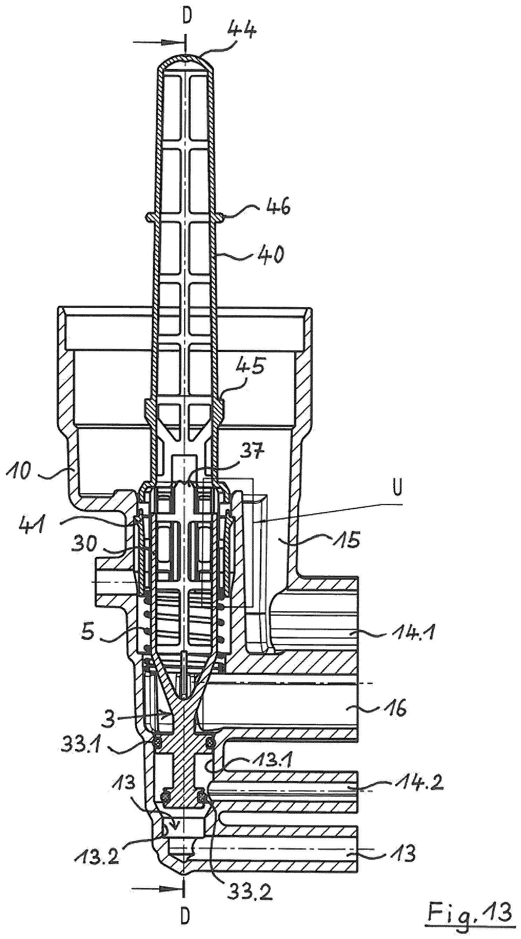

In Figur 13 ist der Zustand nach dem Abnehmen des Deckels 11 und dem Entnehmen des damit verbundenen Filtereinsatzes 2 aus dem Filtergehäuse 10 dargestellt. Die Feder 5 drückt nun den Ventilkörperträger 40 bis zum Anschlag seiner Sperrnasenanordnung 41 am Filtergehäuse 10 nach oben. Der Verschlusszapfen 3, der von dem Ventilkörperträger 40 mit nach oben genommen wurde, befindet sich weiterhin in seiner Öffnungsstellung. Im Filtergehäuse 10 befindliche Flüssigkeit strömt bei in Öffnungsstellung befindlichem Verschlusszapfen 3 durch den Rohflüssigkeitszulauf 15, durch den ersten Verbindungskanal 14.1 und den damit verbundenen, hier nicht dargestellten zugeordneten Wärmetauscher über den zweiten Verbindungskanal 14.2 an der unteren Dichtung 33.2 vorbei durch den Ablasskanal 13 ab, im Falle eines Ölfilters vorzugsweise in die Ölwanne einer zugehörigen Brennkraftmaschine.

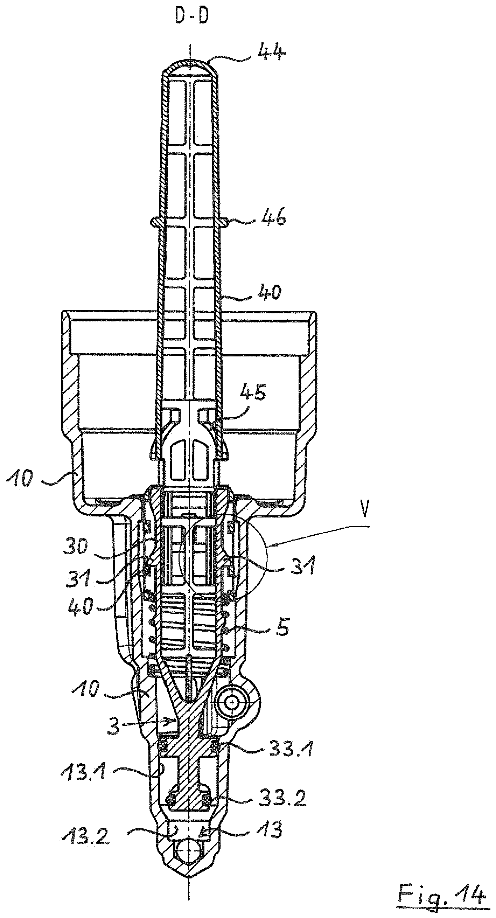

Figur 14 zeigt den teilweise demontierten Flüssigkeitsfilter aus Figur 13 in einem um 90° gedrehten Längsschnitt. Im unteren Teil des Filtergehäuses 10 befindet sich wieder der Verschlusszapfen 3 mit seinen beiden Dichtungen 33.1 und 33.2, von denen letztere vom Filtergehäuse 10 frei ist und den Ablasskanal 13 somit freigibt. Der den oberen Teil des Verschlusszapfens 3 bildende Führungsabschnitt 30 ist im unteren Teil des Ventilkörperträgers 40 axial geführt, wobei die relative axiale Verschiebbarkeit durch die Sperrzungen 31 begrenzt wird. Außerdem sorgen die Sperrzungen 31 für eine Verdrehsicherung von Verschlusszapfen 3 und Ventilkörperträger 40 gegeneinander. An dem oberhalb des Führungsabschnitts 30 befindlichen Teil des Ventilkörperträgers 40 sind dessen Positionierführungsmittel 45 in Form der über dessen Außenumfang verlaufenden, gegensinnig abfallenden Schrägen erkennbar.

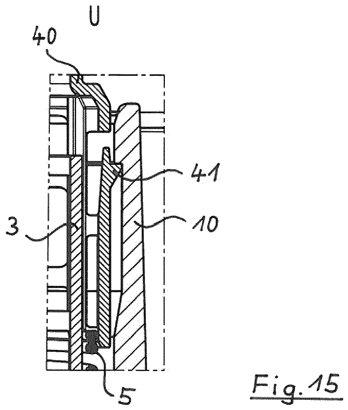

Figur 15 zeigt das Detail U aus Figur 13 in vergrößerter Darstellung, aus der insbesondere das Anliegen der Sperrnasenanordnung 41 an der zugehörigen Stufe des Filtergehäuses 10 deutlich wird.

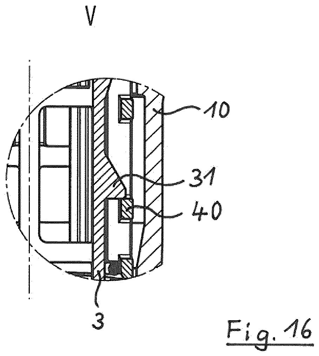

Figur 16 zeigt das Detail V aus Figur 14 in vergrößerter Darstellung. Daraus wird das Zusammenwirken der Sperrzungen 31 mit dem Ventilkörperträger 40 deutlich, wodurch bei Bewegung des Ventilkörperträgers 40 nach oben der Verschlusszapfen 3 nach oben mitgenommen wird.

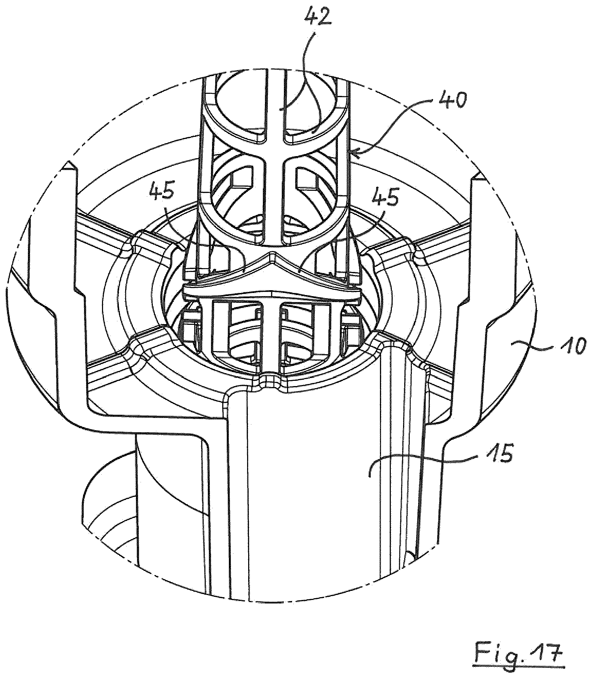

Figur 17 zeigt in einer teilweise weggebrochenen perspektivischen Ansicht das Filtergehäuse 10 zusammen mit dem darin eingesteckten Ventilkörperträger 40. Dem Betrachter zugewandt ist auf der Seite des Gehäuses 10 der darin verlaufende Rohflüssigkeitszulauf 15. Am Ventilkörperträger 40 sind dem Betrachter die Positionierführungsmittel 45 zugewandt, die dazu dienen, die am Filtereinsatz 2 vorhandenen Positionierführungsmittel 25, die hier zugleich die Betätigungselemente 27 sind, in eine in Umfangsrichtung eingriffsgerechte Position zu den Schubnasen 37 des Verschlusszapfens 3 zwangszuführen.

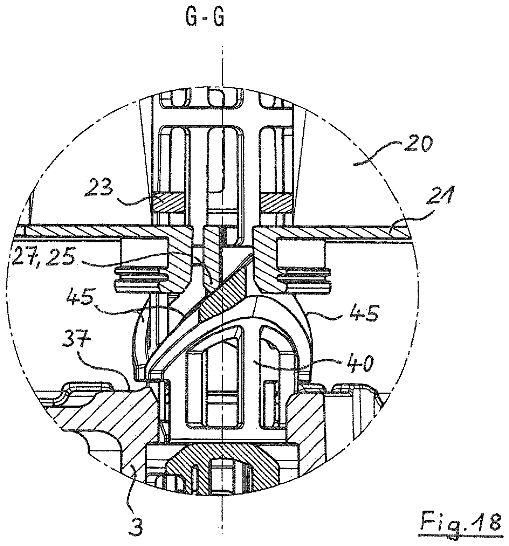

Figur 18 zeigt in einem außermittigen Längsschnitt einen vergrößerten Ausschnitt aus dem Flüssigkeitsfilter 1. Oben in Figur 18 sind ausschnittsweise der Filterstoffkörper 20, die untere Endscheibe 21 und das Stützgitter 23 des Filtereinsatzes 2 erkennbar. Der Filtereinsatz 2 ist in einem Zustand während seines Aufsetzens auf den Ventilkörperträger 40 gezeigt, wobei der Filtereinsatz 2 in Umfangsrichtung gesehen noch nicht seine eingriffsgerechte Position zu dem Verschlusszapfen 3 erreicht hat. Vielmehr sind die Positionierführungsmittel 25 des Filtereinsatzes 2 in einer Zwischenposition auf die Positionierführungsmittel 45 des Ventilkörperträgers 40 in Axialrichtung von oben her aufgetroffen. Im Anschluss daran dreht sich der Filtereinsatz 2 im Uhrzeigersinn und bewegt sich gleichzeitig weiter nach unten, wobei die Positionierführungsmittel 25 auf den Positionierführungsmitteln 45 abgleiten. Am Ende dieser Bewegung liegen die Positionierführungsmittel 25, die gleichzeitig die Betätigungselemente 27 bilden, in passender Gegenüberstellung zu den Schubnasen 37 am Verschlusszapfen 3.

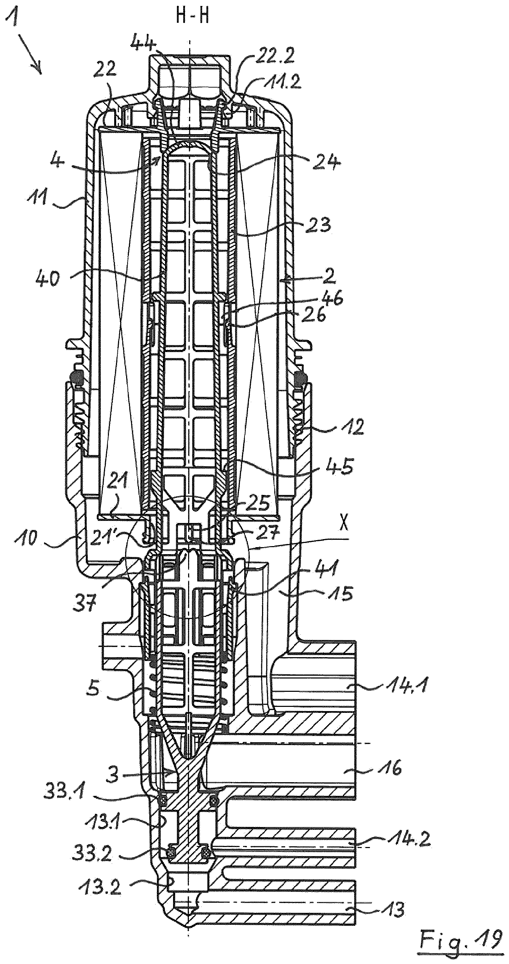

In Figur 19 ist der Flüssigkeitsfilter 1 einem Zustand zu Beginn des Zusammenbauens nach einer Filterwartung dargestellt. Der Deckel 11 des Filtergehäuses 10 ist, zusammen mit dem damit verrasteten Filtereinsatz 2, zu einem geringen Teil in das Schraubgewinde 12 eingeschraubt. In diesem Zustand liegen die Betätigungselemente 27 des Filtereinsatzes 2 noch in einem axialen Abstand von den Schubnasen 37 des Verschlusszapfens 3. Der Ventilkörperträger 40 befindet sich noch in seiner durch die Feder 5 nach oben hin ausgeschobenen Stellung, in der seine Sperrnasenanordnung 41 auf Anschlag am Filtergehäuse 10 liegt. Der Verschlusszapfen 3, der von dem Ventilkörperträger 40 nach oben hin mitgenommen wurde, befindet sich ebenfalls noch in seiner angehobenen Öffnungsstellung, in der er durch die Reibung der oberen Dichtung 33.1 gehalten wird.

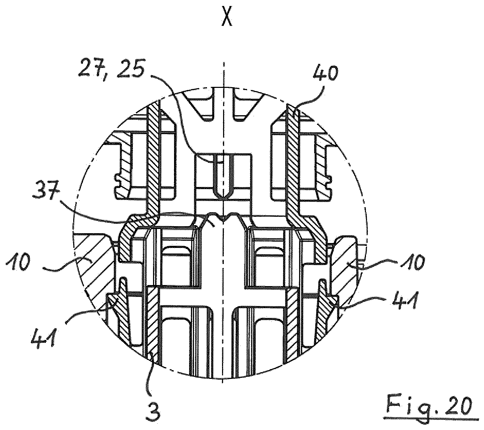

Figur 20 zeigt das Detail X aus Figur 19 in vergrößerter Darstellung, wobei einerseits der Anschlag der Sperrnasenanordnung 41 am Filtergehäuse 10 und andererseits der axiale Abstand zwischen den Betätigungselementen 27 und den Schubnasen 37 deutlich wird.

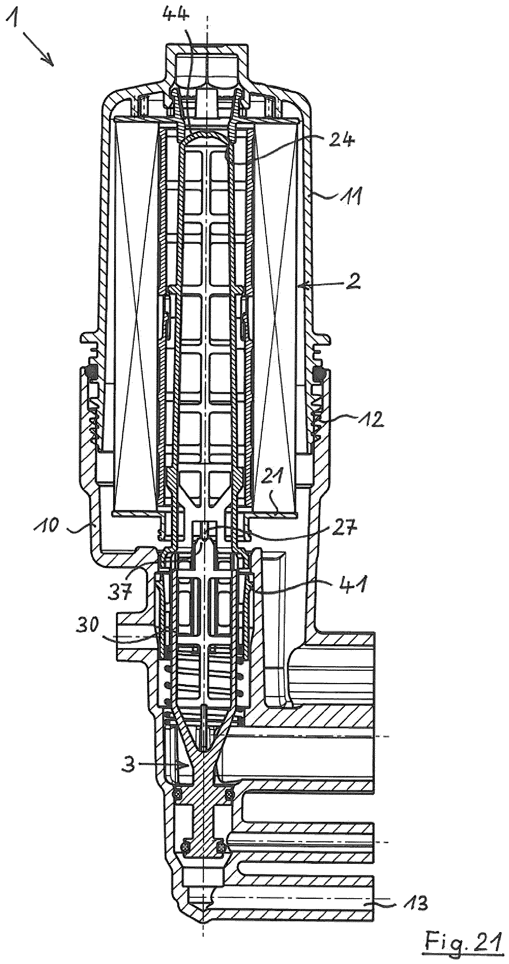

Figur 21 zeigt das Flüssigkeitsfilter 1 aus Figur 19, nun in einem Zustand nach einem etwas weiteren Einschrauben des Deckels 11 in das Filtergehäuse 10. Im Zustand nach Figur 21 liegen nun die Betätigungselemente 27 gerade in axialer Anlage an den Schubnasen 37. Der Ventilkörperträger 40 ist durch Anlage des Ventilkörpers 44 am Dichtsitz 24 schon um einen geringen Weg mit nach unten bewegt worden, was daraus ersichtlich wird, dass nun die Sperrnasenanordnung 41 schon einen geringen axialen Abstand nach unten von der zugehörigen Stufe im Filtergehäuse 10 hat. Auf den Verschlusszapfen 3 hat sich die Bewegung des Deckels 11 nach unten noch nicht übertragen.

Nach weiterem Einschrauben des Deckels 11 in das Filtergehäuse 10 bis zum Anschlag ergibt sich der Zustand des Flüssigkeitsfilters 1, wie er in Figur 4 dargestellt ist und in dem der Verschlusszapfen 3 sich wieder in seiner Schließstellung befindet.

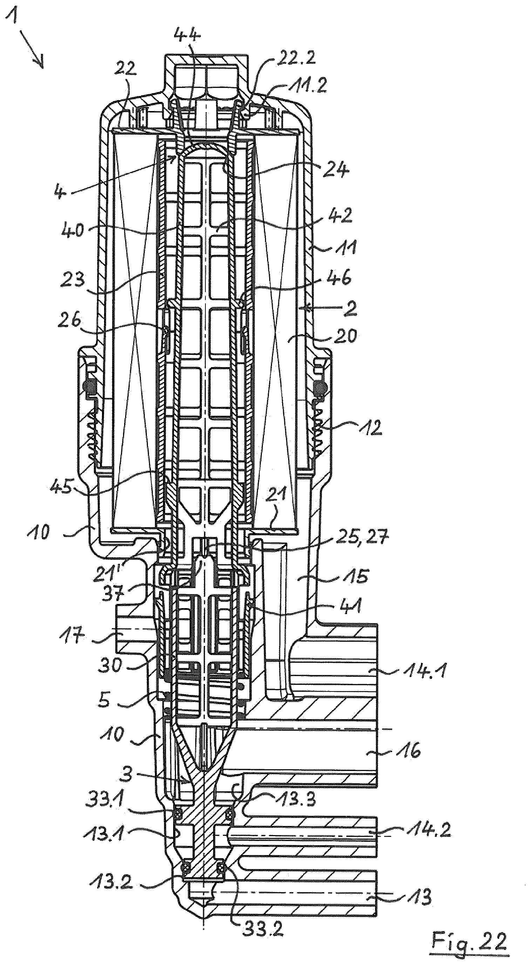

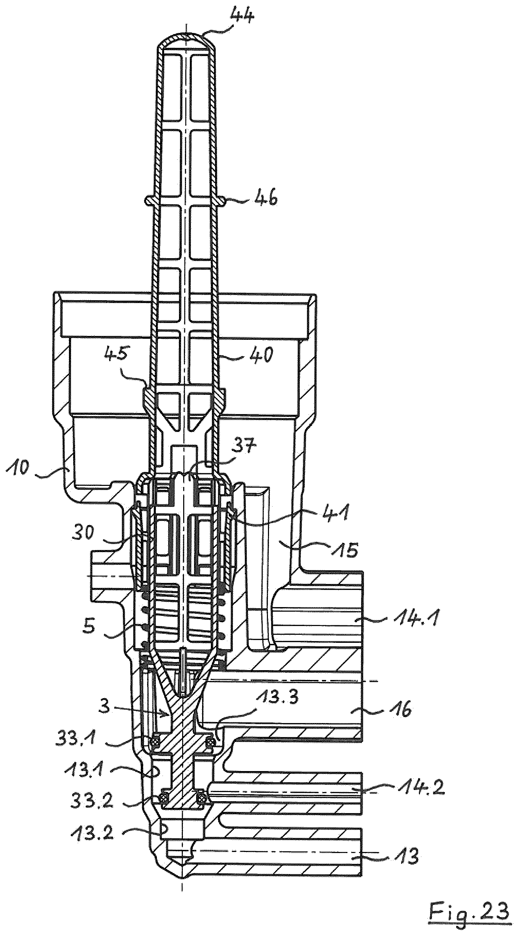

Die Figuren 22 und 23 der Zeichnung zeigen ein gegenüber dem Beispiel nach den vorhergehenden Figuren geändertes, zweites Ausführungsbeispiel. Abweichend von dem ersten Beispiel besitzt das Filtergehäuse 10 des Flüssigkeitsfilters 1 nach Figur 22 und 23 in dem Ablasskanal 13 einen dritten Abschnitt 13.3, der oberhalb der Abschnitte 13.1 und 13.2 liegt und der im Vergleich zu den beiden Abschnitten 13.1 und 13.2 den größten Innendurchmesser hat. Dieser Abschnitt 13.3 schließt sich nach oben hin an den Abschnitt 13.1 an.

In Schließstellung des Verschlusszapfens 3, wie sie im normalen Betrieb des Flüssigkeitsfilters vorliegt, liegt die Dichtung 33.1 dichtend im Abschnitt 13.1 und die Dichtung 33.2 dichtend im Abschnitt 13.2 des Ablasskanals 13.

In Figur 23 ist der Flüssigkeitsfilter aus Figur 22 nach Abnehmen des Deckels 11 und Entnehmen des Filtereinsatzes 2 gezeigt. In diesem Zustand drückt die Feder 5 den Ventilkörperträger 40 bis zum Anschlag seiner Sperrnasenanordnung 41 am Filtergehäuse 10 nach oben, wodurch der Ventilkörperträger 40 auch den Verschlusszapfen 3 nach oben hin in seine oberste Position mitnimmt. In dieser obersten Position des Verschlusszapfens 3 liegt die obere Dichtung 33.1 frei im Abschnitt 13.3 und die untere Dichtung 33.2 frei in Abschnitt 13.1 des Ablasskanals 13. Auf diese Weise wird ein Abströmweg für Flüssigkeit aus dem Filtergehäuse 10 durch dessen zentrale Ausnehmung entlang des unteren Teils des Ventilkörperträgers 40 und entlang des Verschlusszapfens 3 an dessen beiden Dichtungen 33.1 und 33.2 vorbei in den Ablasskanal 13 freigegeben. Parallel kann ein anderer Teil der Flüssigkeit durch den Rohflüssigkeitszulauf 15, den ersten Verbindungskanal 14.1, einen zugeordneten, hier nicht dargestellten Wärmetauscher, einen zweiten, vom Wärmetauscher kommenden Verbindungskanal 14.2 an der unteren Dichtung 33.2 vorbei in den Ablasskanal 13 strömen. Auf diesem zweiten Weg wird zudem auch der Wärmetauscher bei der Filterwartung entleert.

In allen weiteren Einzelteilen und Funktionen entspricht das Flüssigkeitsfilter 1 gemäß den Figuren 22 und 23 dem zuvor erläuterten Ausführungsbeispiel, auf dessen Beschreibung verwiesen wird.

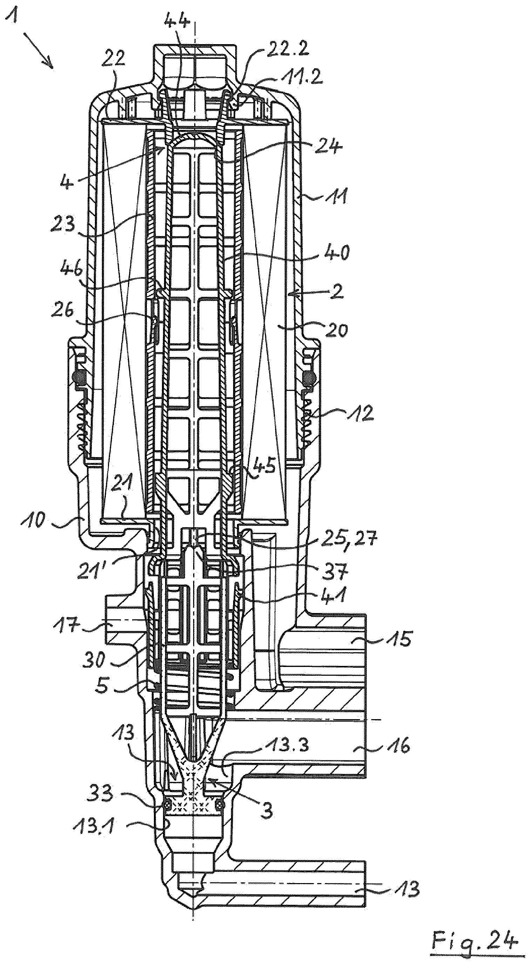

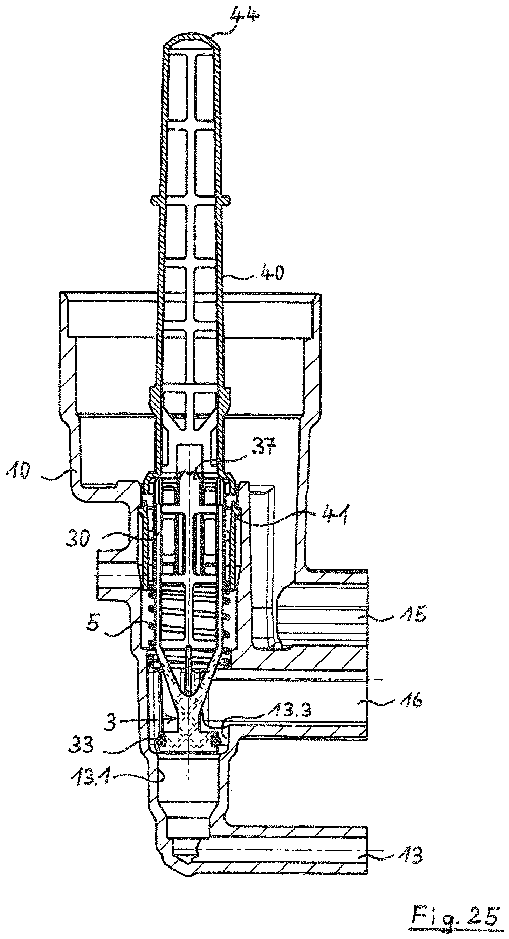

Ein drittes Ausführungsbeispiel der Erfindung ist in den Figuren 24 und 25 dargestellt. Charakteristisch für diese Ausführung des Flüssigkeitsfilters 1 ist, dass hier der Verschlusszapfen 3 nur eine einzige radial dichtende Dichtung 33 aufweist und dass der Ablasskanal 13 im Filtergehäuse 10 nur zwei Abschnitte 13.1 und 13.3 zum Zusammenwirken mit der Dichtung 33 besitzt.

In Figur 24 ist der Flüssigkeitsfilter 1 in seiner Betriebsstellung gezeigt, in der der Filtereinsatz 2 in das Filtergehäuse 10 eingebaut und der Deckel 11 am Filtergehäuse 10 festgeschraubt ist. In diesem Zustand drücken, wie bei den zuvor beschriebenen Beispielen, die Betätigungselemente 27 auf die Schubnasen 37 des Verschlusszapfens 3 und bewegen diesen so nach unten beziehungsweise halten ihn in seiner unteren Lage. In dieser Stellung liegt die Dichtung 33 dichtend im Abschnitt 13.1 des Ablasskanals 13, wodurch dieser flüssigkeitsdicht verschlossen ist. Zu filternde Flüssigkeit gelangt durch den Rohflüssigkeitszulauf 15 in das Flüssigkeitsfilter 1 und verlässt dieses nach Durchströmen des Filterstoffkörpers 20 des Filtereinsatzes 2 durch den Reinflüssigkeitsablauf 16. Ein Wärmetauscher ist dem Flüssigkeitsfilter 1 hier nicht zugeordnet.

In Figur 25 ist der Flüssigkeitsfilter aus Figur 24 nach Abnehmen des Deckels 11 und Entnehmen des Filtereinsatzes 2 gezeigt. Auch hier hat nun die Feder 5 den Ventilkörperträger 40 bis zum Anschlag seiner Sperrnasenanordnung 41 am Filtergehäuse 10 nach oben hin ausgeschobenen. Über die in den Figuren 1, 2, 14 und 16 dargestellte und erläuterte, in Figur 25 nicht sichtbare Sperrzungenanordnung 31 wird dabei der Verschlusszapfen 3 mit nach oben in seine in Figur 25 gezeigte oberste Stellung bewegt. In dieser Stellung liegt die Dichtung 33 frei im Abschnitt 13.3 des Ablasskanals 13, wodurch dieser geöffnet ist. Im Filtergehäuse 10 befindliche Flüssigkeit kann so durch die zentrale Ausnehmung des Gehäuses 10 entlang des unteren Teils des Ventilkörperträgers 40 und entlang des Verschlusszapfens 3 an der Dichtung 33 vorbei durch den Ablasskanal 13 abfließen.

In allen weiteren Einzelteilen und Funktionen entspricht das Flüssigkeitsfilter 1 gemäß den Figuren 24 und 25 den zuvor erläuterten Ausführungsbeispielen, auf deren Beschreibung verwiesen wird.

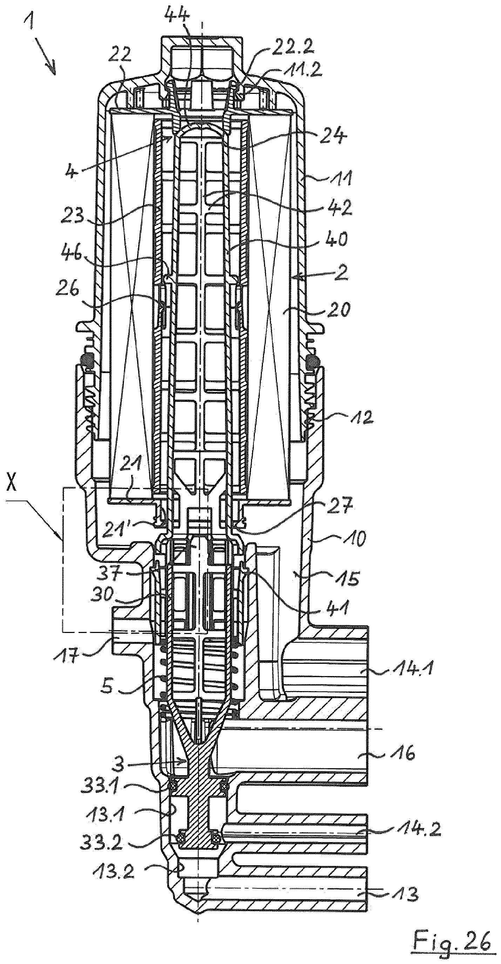

Die Figuren 26 bis 33 der Zeichnung zeigen ein viertes Ausführungsbeispiel des Flüssigkeitsfilters 1. Für dieses Beispiel ist charakteristisch, dass es keine Positionierführungsmittel am Filtereinsatz 2 und am Ventilkörperträger 40 aufweist. Die Betätigungselemente 27 an der Unterseite der unteren Endscheibe 21 des Filtereinsatzes 2 sind hier als ringförmiger, umlaufende Kragen ausgebildet, die in jeder beliebigen Verdrehstellung des Filtereinsatzes 2 relativ zum Ventilkörperträger 40 und zum Verschlusszapfen 3 mit dessen Schubnasen 37 in Eingriff treten.

In Figur 26 ist das Flüssigkeitsfilter 1 in einem Zustand zu Beginn des Zusammenbauen im Rahmen einer Wartung nach Einrasten eines frischen Filtereinsatzes 2 in den Deckel 11 und nach einem anfänglichen Einschrauben des Deckels 11 in das Filtergehäuse 10 gezeigt. Durch das vorherige Abnehmen des Deckels 11 und Entnehmen des Filtereinsatzes 2 befinden sich der Verschlusszapfen 3 und der Ventilkörperträger 40 noch im ihrer jeweiligen obersten Position. Die Betätigungselemente 27 haben im Zustand gemäß Figur 26 noch einen kleinen axialen Abstand von den Schubnasen 37 des Verschlusszapfens 3.

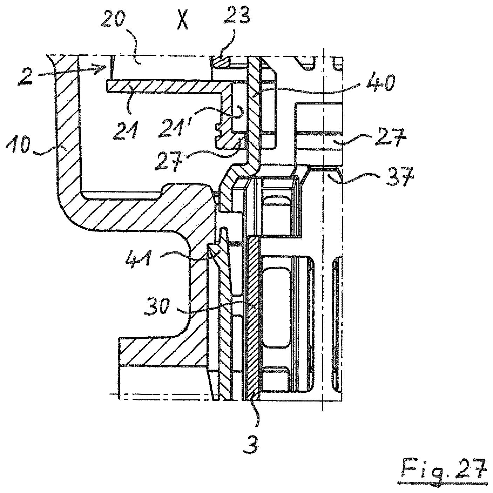

Figur 27 zeigt das Detail X aus Figur 26 in vergrößerter Darstellung. Links ist ein Teil des Filtergehäuses 10 sichtbar. Oben ist der Endbereich des Filtereinsatzes 2 erkennbar, nämlich Teile von dessen unterer Endscheibe 21, des Filterstoffkörpers 20 und des Stützgitters 23. In ihrem Zentrum weist die untere Endscheibe 21 die zentrale Aufstecköffnung 21' auf, die unterseitig durch den die Betätigungselemente 27 bildenden, umlaufenden Kragen begrenzt ist.

In einem kleinen axialen Abstand unterhalb der Betätigungselemente 27 liegt eine der Schubnasen 37 des Verschlusszapfens 3. Im unteren Teil der Figur 27 ist zwischen dem Führungsabschnitt 30 des Verschlusszapfens 3 und dem Filtergehäuse 10 eine Sperrnase der Sperrnasenanordnung 41 erkennbar, die in Anlage an der zugehörigen Stufe des Filtergehäuses 10 liegt.

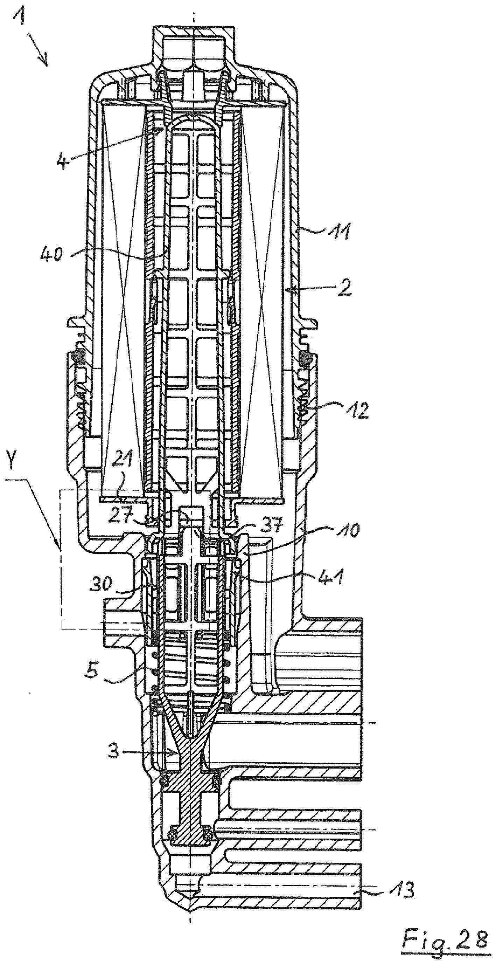

In Figur 28 ist der Flüssigkeitsfilter 1 aus Figur 26 in einem Zustand gezeigt, der nach einem geringfügigen weiteren Einschrauben des Deckels 11 in das Filtergehäuse 10 eintritt. Der Filtereinsatz 2 ist nun zusammen dem Deckel 11 so weit nach unten bewegt, dass die Betätigungselemente 27 gerade in Anlage an die Schubnasen 37 des Verschlusszapfens 3 treten. Da der Ventilkörperträger 40 mit seinem Ventilkörper 44 schon in Anlage an dem Ventilsitz 24 liegt, ist nun der Ventilkörperträger 40 schon um einen kleinen Weg nach unten bewegt, was daran ersichtlich wird, dass die Sperrnasenanordnung 41 nun einen geringen axialen Abstand von der zugehörigen Stufe des Filtergehäuses 10 hat.

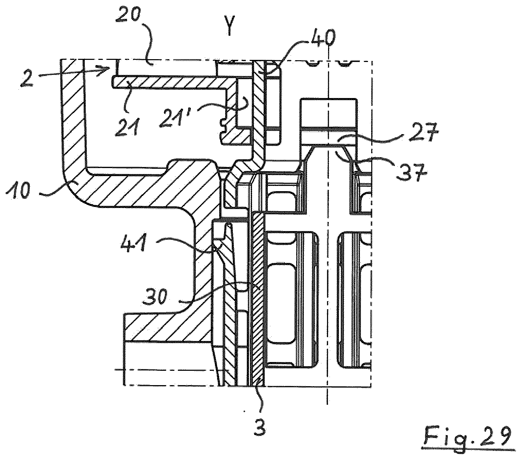

Dieser Zustand ist in dem in Figur 29 gezeigten Detail Y aus Figur 28 nochmals vergrößert dargestellt. Hier wird insbesondere die Anlage der Betätigungselemente 27 an den Schubnasen 37 und der kleine axiale Abstand der Sperrnasenanordnung 41 von der zugehörigen Stufe des Filtergehäuses 10 erkennbar.

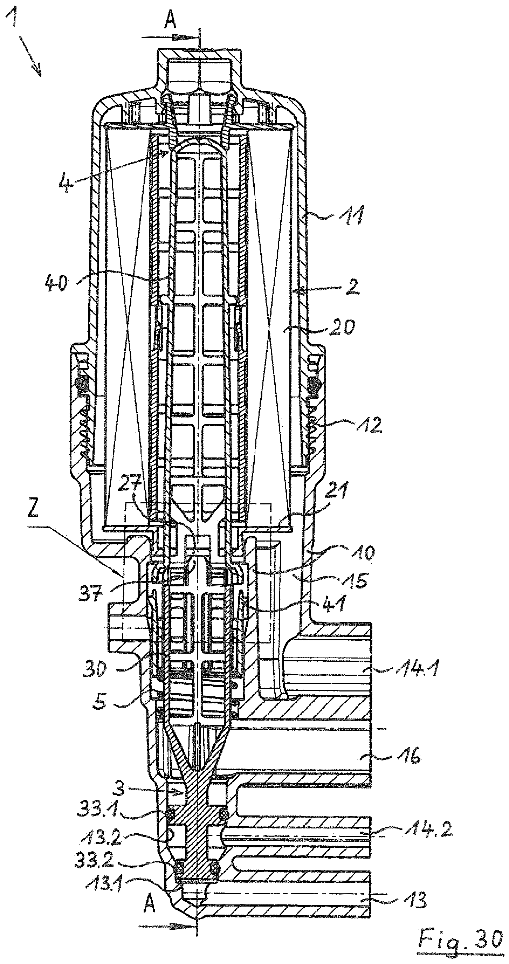

Figur 30 zeigt das Flüssigkeitsfilter 1 nun in seinem vollständig zusammengebauten Zustand, in dem der Deckel 11 fest mit dem Filtergehäuse 10 verschraubt ist. Über die Betätigungselemente 27 am Filtereinsatz 2 ist der Verschlusszapfen 3 in seine unterstelle Position gedrückt, ebenso wie der Ventilkörperträger 40 durch den Filtereinsatz 2. In dieser Stellung liegen die Dichtungen 33.1 und 33.2 dichtend in den Abschnitten 13.1 und 13.2 des Ablasskanals 13, wodurch dieser dicht verschlossen ist. Der Filtereinsatz 2 steckt mit seiner unteren Endscheibe 21 dichtend in der zentralen Ausnehmung des Filtergehäuses 10 und das Filterumgehungsventil 4 am oberen Ende des Ventilkörperträgers 40 ist geschlossen, wodurch eine Strömungsverbindung von der Rohseite zur Reinseite nur durch den Filterstoffkörper 20 des Filtereinsatzes 2 besteht.

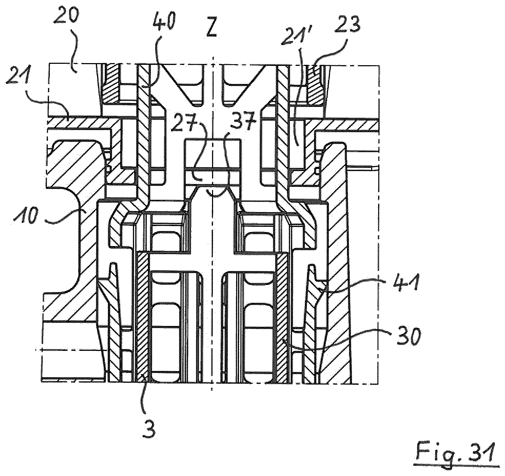

In Figur 31 ist das Detail Z aus Figur 30 vergrößert dargestellt.

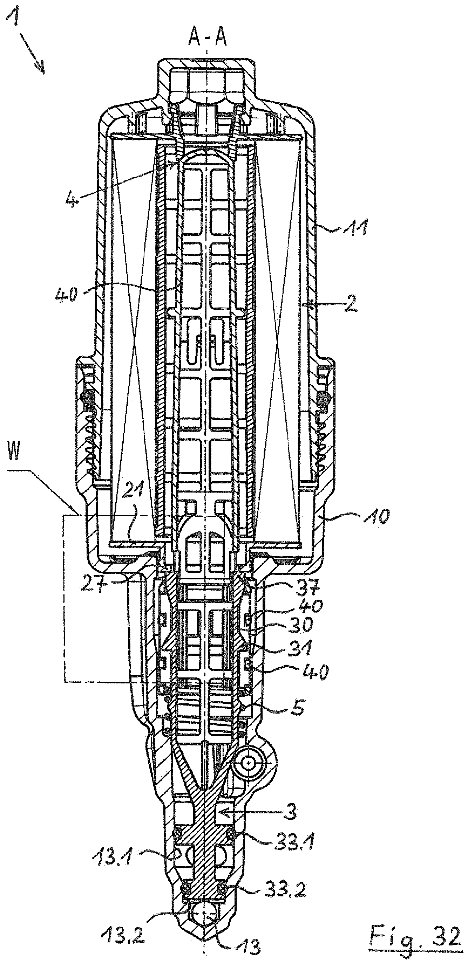

Figur 32 zeigt den Flüssigkeitsfilter 1 aus Figur 30 in einem um 90° verdrehten Längsschnitt gemäß der Linie A-A. In dieser Schnittebene wird die Lage der Sperrzungen 31 am Führungsabschnitt 30 des Verschlusszapfens 3 in Ausnehmungen des unteren Bereichs des Ventilkörperträgers 40 erkennbar, wodurch der Ventilkörperträger 40 den Verschlusszapfen 3 axial begrenzt verschieblich führt.

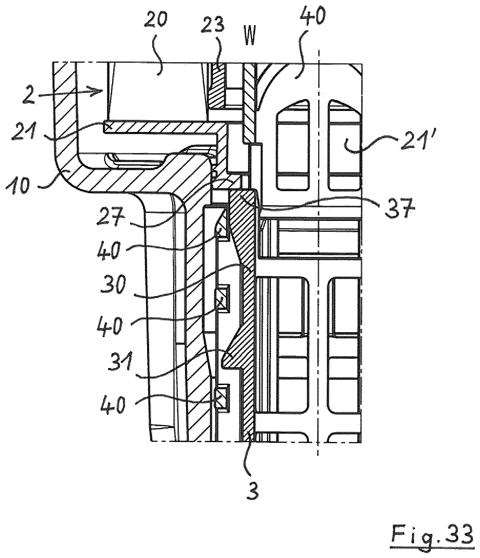

In Figur 33 ist das Detail W aus Figur 32 vergrößert dargestellt.

In allen weiteren Einzelteilen und Funktionen entspricht der Flüssigkeitsfilter 1 gemäß den Figuren 26 bis 33 dem oben erläuterten ersten Ausführungsbeispiel, auf dessen Beschreibung verwiesen wird.

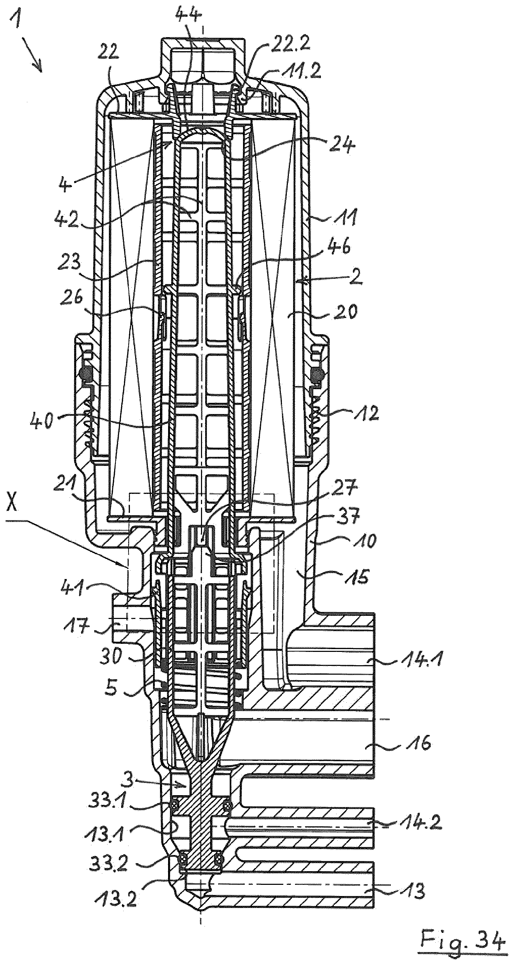

Die Figuren 34 bis 40 schließlich zeigen ein fünftes Ausführungsbeispiel der Erfindung. Dieses Ausführungsbeispiel entspricht im Wesentlichen dem zuvor beschriebenen vierten Ausführungsbeispiel; unterschiedlich ist bei dem fünften Ausführungsbeispiel die Gestaltung der Betätigungselemente 27 an der unteren Endscheibe 21 des Filtereinsatzes 2. Daran angepasst ist auch der Ventilkörperträger 40 etwas anders als beim vierten Ausführungsbeispiel ausgeführt.

In Figur 34 ist der Flüssigkeitsfilter 1 in seiner normalen Betriebsstellung gezeigt. Der Deckel 11 ist zusammen mit dem Filtereinsatz 2 mit dem Filtergehäuse 10 verbunden. Über die Betätigungselemente 27 des Filtergehäuses 2 ist der Verschlusszapfen 3 nach unten in seine Schließstellung gedrückt und der Ventilkörperträger 40 liegt, belastet durch die Kraft der Feder 5, mit seinem Ventilkörper 44 am Ventilsitz 24 der oberen Endscheibe 22 des Filtereinsatzes 2 an.

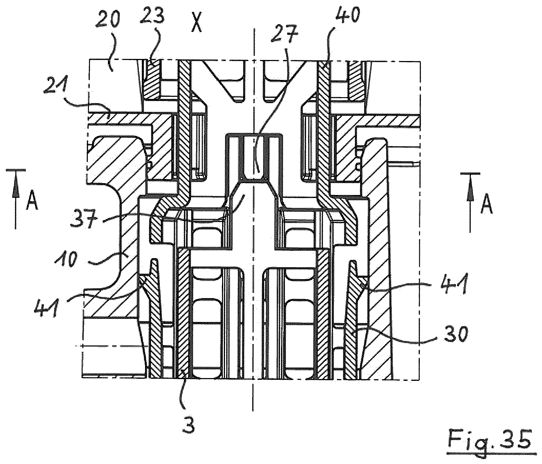

In Figur 35 ist das Detail X aus Figur 34 vergrößert dargestellt.

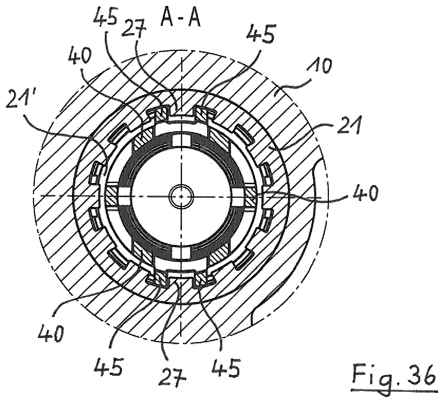

Figur 36 zeigt einen Schnitt durch den Flüssigkeitsfilter gemäß der Linie A-A in Figur 35. Radial außen ist das Filtergehäuse 10 geschnitten. Radial innen liegt darin die untere Endscheibe 21 mit ihrer zentralen Aufstecköffnung 21'. Mit der Aufstecköffnung 21' ist die untere Endscheibe 21 und mit ihr der hier nicht sichtbare übrige Filtereinsatz 2 auf den Ventilkörperträger 40 aufgesteckt. Die Betätigungselemente 27 am Innenumfang der zentralen Aufstecköffnung 21' der unteren Endscheibe 21 sind hier durch in Umfangsrichtung beabstandete, radial nach innen vorragende Zähne gebildet. Jeweils zwei einander gegenüberliegende Zähne passen zwischen zwei in Axialrichtung verlaufende, Positionierführungsmittel 45 am Ventilkörperträger 40 bildende kurze Rippen. Hiermit wird ein Schlüssel-Schloss-System realisiert, welches die Verwendung von ungeeigneten Fremd-Filtereinsätzen im Flüssigkeitsfilter 1 gemäß Erfindung verhindert.

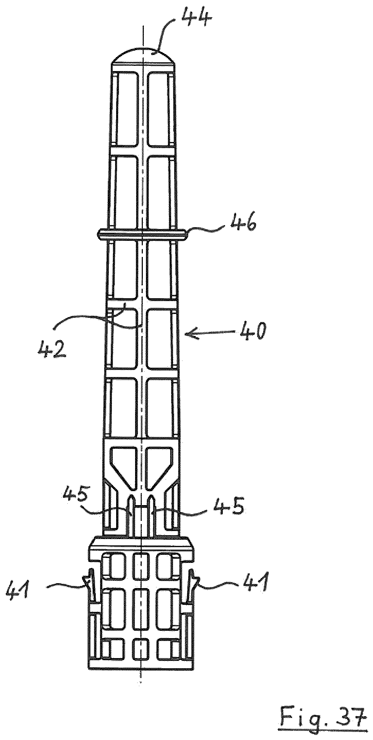

Figur 37 zeigt den Ventilkörperträger 40 als Einzelteil in Ansicht. Der Ventilkörperträger 40 hat die Gestalt eines gitterförmigen hohlzylindrischen Körpers aus in Umfangsrichtung und in Längsrichtung verlaufenden Trägerstreben 42. Ganz oben am Ventilkörperträger 40 ist hier einstückig der kalottenförmige Ventilkörper 44 angeformt. Im Abstand darunter befindet sich das zweite Rastverbindungsmittel 46 in Form einer umlaufenden Rastwulst. Noch weiter nach unten folgen die Positionierführungsmittel 45 auf dem Außenumfang des Ventilkörperträgers 40, die zum Zusammenwirken mit den Betätigungselementen 27 des Filtereinsatzes 2 dienen, wie zuvor beschrieben. Am untersten Abschnitt des Ventilkörperträgers 40 ist schließlich die Sperrnasenanordnung 41 mit den zwei einander gegenüberliegenden, die Sperrnasen tragenden federnden Sperrzungen erkennbar.

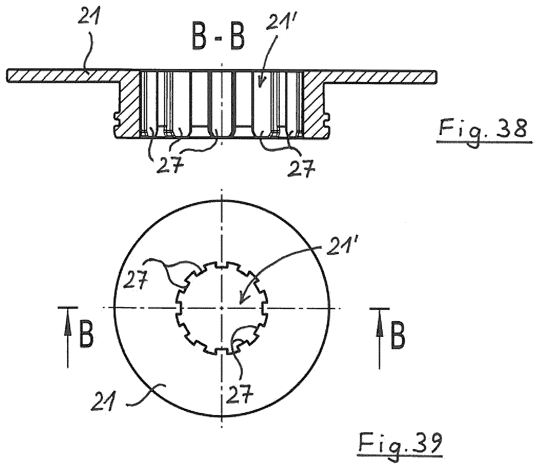

Figur 38 zeigt die untere Endscheibe 21 des Filtereinsatzes 2 des Flüssigkeitsfilters 1 aus Figur 34 im Querschnitt als Einzelteil. Hier wird die am Innenumfang der zentralen Aufstecköffnung 21' angeordnete Verzahnung zur Bildung der Betätigungselemente 27 besonders deutlich. Die einzelnen Zähne sind in Umfangsrichtung gleichmäßig verteilt und verlaufen in Axialrichtung der Endscheibe 21. Jeweils am unteren Ende besitzt jeder Zahn Einlaufschrägen, die das Einlaufen der zwei mit den Positionierführungsmitteln 45 am Ventilkörperträger 40 zusammenwirkenden Zähne erleichtern.

In Figur 39 ist die Endscheibe 21 in Draufsicht gezeigt, wobei insbesondere die regelmäßige Anordnung der die Betätigungselemente 27 bildenden Zähne der Verzahnung am Innenumfang der zentralen Aufstecköffnung 21' deutlich wird.

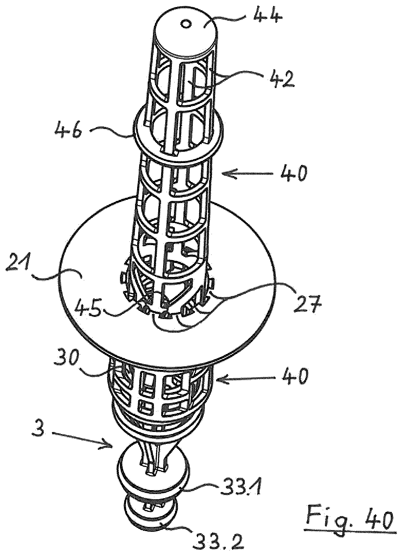

Figur 40 schließlich zeigt in einer perspektivischen Ansicht das Zusammenwirken von Verschlusszapfen 3, Ventilkörperträger 40 und Endscheibe 21. Oben in Figur 40 ist der Ventilkörperträger 40 mit seinem Ventilkörper 44 und dem zweiten Rastverbindungsmittel 46 erkennbar. Von unten her ist in den Ventilkörperträger 40 der Verschlusszapfen 3 eingesteckt und verrastet. Von oben her ist auf den Ventilkörperträger 40 die Endscheibe 21 aufgesteckt, die über ihre zahnförmigen Betätigungselemente 27 mit den Positionierführungsmitteln 45 am Ventilkörperträger 40 nach Art eines Schlüssel-Schloss-Systems zusammenwirkt. Über jeweils die Betätigungselemente 27, die zwischen den Positionierführungsmitteln 45 zu liegen kommen, wird der Verschlusszapfen 3 relativ zum Filtergehäuse 10 in Einschubrichtung nach unten betätigt. Der Einsatz eines ungeeigneten Fremd-Filtereinsatzes mit einer einen glatten Innenumfang aufweisenden unteren Endscheibe wird so verhindert, da ein solcher Fremd-Filtereinsatz nicht in der Lage wäre, den Verschlusszapfen 3 nach unten hin in seine dichtende Verschlussstellung auszuschieben. In diesem Falle bliebe dann der Ablasskanal offen und es würde kein Flüssigkeitsdruck im Flüssigkeitsfilter 1 aufgebaut werden können. Im Falle eines Ölfilters einer Brennkraftmaschine würde dies beispielsweise durch Aufleuchten der Öldruck-Kontrollanzeige signalisiert. Ein entsprechender Drucksensor kann beispielsweise an einen Drucksensoranschluss 17 am Filtergehäuse 10 angeschlossen werden.

Das Filtergehäuse 10 des Flüssigkeitsfilters 1 besteht aus Gründen der Dauerfestigkeit bevorzugt aus Leichtmetall, wie Aluminium, und wird zweckmäßig im Druckgussverfahren hergestellt. Der Verschlusszapfen 3 und der Ventilkörperträger 40 sowie die Endscheiben 21 und 22 und das Stützgitter 23 des Filtereinsatzes 2 bestehen insbesondere aus Gewichts- und Entsorgungsgründen bevorzugt aus einem Kunststoff, wie Polyamid, und sind zweckmäßig Spritzgussteile.

### Bezugszeichenliste:

| Zeichen | Bezeichnung |
|---|---|
| | |
| 1 | Flüssigkeitsfilter insgesamt |
| 10 | Filtergehäuse |
| 11 | abnehmbarer Deckel |
| 11.2 | Rastverbindungsmittel zu 22.2 |
| 12 | Schraubgewinde |
| 13 | Ablasskanal |
| 13.1, 13.2, 13.3 | Abschnitte von 13 |
| 14.1, 14.2 | Verbindungskanäle |
| 15 | Rohflüssigkeitszulauf |
| 16 | Reinflüssigkeitsablauf |
| 17 | Drucksensoranschluss |
| | |
| 2 | Filtereinsatz |
| 20 | Filterstoffkörper |
| 21 | untere Endscheibe |
| 21' | zentrale Aufstecköffnung in 21 |
| 22 | obere Endscheibe |
| 22.2 | Rastverbindungsmittel zu 11.2 |
| 23 | Stützgitter in 20 |
| 24 | Ventilsitz in 22 |
| 25 | Positionierführungsmittel an 2 |
| 26 | zweite Rastverbindungsmittel |
| 27 | Betätigungselemente an 2 für 37 |
| | |
| 3 | Verschlusszapfen |
| 30 | Führungsabschnitt in 4 |
| 31 | Sperrzungen |
| 33, 33.1, 33.2 | Dichtungen an 3 |
| 35 | Haltenocken für 5 |
| 37 | Schubnasen |
| | |
| 4 | Filterumgehungsventil |
| 40 | Ventilkörperträger |
| 41 | Sperrnasenanordnung |
| 42 | Trägerstreben |
| 44 | Ventilkörper |
| 45 | Positionierführungsmittel an 4 |
| 46 | zweite Rastverbindungsmittel |
| | |
| 5 | Feder |
| | |
| 6 | vormontierte Baugruppe |

## Patentansprüche

1. Flüssigkeitsfilter (1), insbesondere Ölfilter einer Brennkraftmaschine, mit einem Filtergehäuse (10) mit einem abnehmbaren Deckel (11) und mit einem Rohflüssigkeitseinlass und einem Reinflüssigkeitsauslass, mit einem im Filtergehäuse (10) auswechselbar angeordneten, eine Rohseite und eine Reinseite des Flüssigkeitsfilters (1) voneinander trennenden Filtereinsatz (2) mit einem stirnseitig von zwei Endscheiben (21, 22) eingefassten hohlzylindrischen Filterstoffkörper (20), wobei die im Einbauzustand untere Endscheibe (21) eine zentrale Aufstecköffnung (21') aufweist, wobei das Flüssigkeitsfilter (1) ein Filterumgehungsventil (4) aufweist, wofür die im Einbauzustand obere Endscheibe (22) unterseitig einen mit einem Ventilkörper (44) zusammenwirkenden zentralen Ventilsitz (24) aufweist, wobei das Filtergehäuse (10) weiter einen zentralen Ablasskanal (13) zum Entleeren des Filtergehäuses (10) bei einem Entnehmen des Filtereinsatzes (2) aufweist und wobei in dem Ablasskanal (13) ein im Einbauzustand gehäusefester Verschlusszapfen (3) angeordnet ist, der zwischen einer bei eingebautem Filtereinsatz (2) und geschlossenem Deckel (11) eingenommenen Schließstellung und einer bei abgenommenem Deckel (11) und entnommenem Filtereinsatz (2) eingenommenen Öffnungsstellung axial verstellbar ist,
**dadurch gekennzeichnet,**
- **dass** mit dem Verschlusszapfen (3) axial begrenzt verschiebbar ein durch den Filtereinsatz verlaufender Ventilkörperträger (40) verbunden ist, der einen Ventilkörper (44) des Filterumgehungsventils (4) an seinem freien Ende aufweist und auf den der Filtereinsatz (2) mit seiner die Aufstecköffnung (21') aufweisenden Endscheibe (21) voran aufsteckbar ist,
- **dass** der Ventilkörperträger (40) mit einer in Schließrichtung des Filterumgehungsventils (4) wirkenden Kraft einer am Filtergehäuse abgestützten Feder (5) vorbelastet ist und
- **dass** von dem Filtereinsatz (2) bei oder bei und nach seinem Aufstecken auf den Ventilkörperträger (40) eine in Richtung zur Schließstellung des Verschlusszapfens (3) wirkende Kraft unmittelbar auf den Verschlusszapfen (3) ausübbar ist.

2. Flüssigkeitsfilter nach Anspruch 1, **dadurch gekennzeichnet, dass** der Ventilkörperträger (40) und der Ventilkörper (44) des Filterumgehungsventils (4) einstückig ausgebildet sind.

3. Flüssigkeitsfilter nach Anspruch 1 oder 2, **dadurch gekennzeichnet, dass** der Verschlusszapfen (3) in seinem oberen Endbereich zwei oder mehr über den Umfang verteilte, radial nach außen über den Außenumfang des Ventilkörperträgers (40) vorstehende Schubnasen (37) aufweist, auf die vom Filtereinsatz (2) die in Richtung zur Schließstellung des Verschlusszapfens (3) wirkende Schubkraft ausübbar ist.

4. Flüssigkeitsfilter nach einem der Ansprüche 1 bis 3, **dadurch gekennzeichnet, dass** der Verschlusszapfen (3) und der Ventilkörperträger (40) relativ zueinander unverdrehbar geführt sind.

5. Flüssigkeitsfilter nach Anspruch 3 oder 4, **dadurch gekennzeichnet, dass** an der unteren Endscheibe (21) oder an einem Stützgitter (23) des Filtereinsatzes (2) Betätigungselemente (27) für die Schubnasen (37) angeordnet sind.

6. Flüssigkeitsfilter nach Anspruch 5, **dadurch gekennzeichnet, dass** die Betätigungselemente (27) durch zwei oder mehr radial nach innen vorragende, axial verlaufende Rippen oder durch eine Zahnanordnung mit mehreren radial nach innen vorragenden, axial verlaufenden Zähnen gebildet sind.

7. Flüssigkeitsfilter nach Anspruch 5 oder 6, **dadurch gekennzeichnet, dass** am Innenumfang des Filtereinsatzes (2) und am Außenumfang des Ventilkörperträgers (40) zusammenwirkende Positionierführungsmittel (25 und 45) angeordnet sind, mit denen der Filtereinsatz (2) bei seinem Aufstecken auf den Ventilkörperträger (40) in Umfangsrichtung in eine eingriffsgerechte Position seiner Betätigungselemente (27) relativ zu den Schubnasen (37) zwangsführbar ist.

8. Flüssigkeitsfilter nach Anspruch 7, **dadurch gekennzeichnet, dass** die Betätigungselemente (27) für die Schubnasen (37) mit den am Filtereinsatz (2) vorgesehenen Positionierführungsmitteln (25) identisch sind.

9. Flüssigkeitsfilter nach einem der Ansprüche 1 bis 8, **dadurch gekennzeichnet, dass** als Feder (5) zwischen dem unteren Ende des Ventilkörperträgers (40) und dem Filtergehäuse (10) eine den Verschlusszapfen (3) umgebende Schraubendruckfeder angeordnet ist.

10. Flüssigkeitsfilter nach Anspruch 9, **dadurch gekennzeichnet, dass** am Außenumfang des Ventilkörperträgers (40) mehrere nach außen weisende Haltenocken (35) vorgesehen sind, die bei entspannter Feder (5) in Eingriff mit dieser und bei zumindest teilweise zusammengedrückter Feder (5) außer Eingriff mit dieser stehen.

11. Flüssigkeitsfilter nach einem der Ansprüche 1 bis 10, **dadurch gekennzeichnet, dass** der Ventilkörperträger (40) mit einem unteren Abschnitt im Filtergehäuse (10) axial verschiebbar geführt ist und dass der Verschiebeweg des Ventilkörperträgers (40) in Ausschubrichtung relativ zum Filtergehäuse (10) durch eine federnde Sperrnasenanordnung (41) begrenzt ist.

12. Flüssigkeitsfilter nach einem der Ansprüche 1 bis 11, **dadurch gekennzeichnet, dass** der Deckel (11) an seiner Unterseite und die obere Endscheibe (22) des Filtereinsatzes (2) an ihrer Oberseite zusammenwirkende, relativ zueinander verdrehbare, lösbare erste Rastverbindungsmittel (11.2 und 22.2) aufweisen, mit denen eine vorgebbare erste Zugkraft in Axialrichtung übertragbar ist.

13. Flüssigkeitsfilter nach Anspruch 12, **dadurch gekennzeichnet, dass** der Filtereinsatz (2) einerseits und der Ventilkörperträger (40) oder der Verschlusszapfen (3) andererseits zusammenwirkende, lösbare zweite Rastverbindungsmittel (26 und 46) aufweisen, mit denen eine vorgebbare zweite Zugkraft, die kleiner als die erste Zugkraft ist, in Axialrichtung übertragbar ist.

14. Flüssigkeitsfilter nach einem der Ansprüche 1 bis 13, **dadurch gekennzeichnet, dass** eine oder jede am Verschlusszapfen (2) vorgesehene Dichtung (33; 33.1, 33.2) eine radial dichtende Dichtung, vorzugsweise ein Dichtring, weiter vorzugsweise ein O-Ring, ist.

15. Flüssigkeitsfilter nach einem der Ansprüche 1 bis 14, **dadurch gekennzeichnet, dass** der Verschlusszapfen (3) in seinem unteren, mit dem Ablasskanal (13) zusammenwirkenden Teil eine radial dichtende Dichtung (33) aufweist und dass der Ablasskanal (13) in seinem mit der Dichtung (33) bei der axialen Bewegung des Verschlusszapfens (3) zusammenwirkenden Bereich zwei Abschnitte (13.1 und 13.3) mit unterschiedlichem, von unten nach oben gestuft größer werdendem Innendurchmesser hat, wobei sich die Dichtung (33) frei in dem Abschnitt (13.3) mit dem größeren Innendurchmesser in der Öffnungsstellung und dichtend in dem Abschnitt (13.1) mit dem kleineren Innendurchmesser in der Schließstellung des Verschlusszapfens (3) befindet.

16. Flüssigkeitsfilter nach einem der Ansprüche 1 bis 14, **dadurch gekennzeichnet, dass** mit dem Flüssigkeitsfilter (1) ein Wärmetauscher für die das Flüssigkeitsfilter (1) durchströmende Flüssigkeit verbunden oder verbindbar ist, dass der Verschlusszapfen (3) in seinem unteren, mit dem Ablasskanal (13) zusammenwirkenden Teil zwei axial beabstandete radial dichtende Dichtungen (33.1 und 33.2) unterschiedlichen Durchmessers aufweist und dass der Ablasskanal (13) in seinem mit den Dichtungen (33.1 und 33.2) bei der axialen Bewegung des Verschlusszapfens (3) zusammenwirkenden Bereich zwei Abschnitte (13.1 und 13.2) mit unterschiedlichem, von unten nach oben gestuft größer werdendem Innendurchmesser hat, wobei sich die Dichtung (33.2) mit dem kleineren Durchmesser dichtend in dem Abschnitt (13.2) mit dem kleineren Innendurchmesser in der Schließstellung und offen in dem Abschnitt (13.1) mit dem größeren Innendurchmesser in der Öffnungsstellung des Verschlusszapfens (3) befindet, wobei sich die Dichtung (33.1) mit dem größeren Durchmesser immer dichtend in dem Abschnitt (13.1) mit dem größeren Innendurchmesser befindet und wobei ein erster Verbindungskanal (14.1) zwischen Flüssigkeitsfilter (1) und Wärmetauscher oberhalb der Dichtung (33.1) mit dem größeren Durchmesser vom Ablasskanal (13) abgeht und ein zweiter Verbindungskanal (14.2) zwischen Wärmetauscher und Flüssigkeitsfilter (1) zwischen den beiden Dichtungen (33.1 und 33.2) in den Ablasskanal (13) mündet.

17. Flüssigkeitsfilter nach einem der Ansprüche 1 bis 14, **dadurch gekennzeichnet, dass** mit dem Flüssigkeitsfilter (1) ein Wärmetauscher für die das Flüssigkeitsfilter (1) durchströmende Flüssigkeit verbunden oder verbindbar ist, dass der Verschlusszapfen (3) in seinem unteren, mit dem Ablasskanal (13) zusammenwirkenden Teil zwei axial beabstandete radial dichtende Dichtungen (33.1 und 33.2) unterschiedlichen Durchmessers aufweist und dass der Ablasskanal (13) in seinem mit den Dichtungen (33.1 und 33.2) bei der axialen Bewegung des Verschlusszapfens (3) zusammenwirkenden Bereich drei Abschnitte (13.1, 13.2 und 13.3) mit unterschiedlichem, von unten nach oben gestuft größer werdendem Innendurchmesser hat, wobei sich die Dichtung (33.2) mit dem kleineren Durchmesser dichtend in dem Abschnitt (13.2) mit dem kleinsten Innendurchmesser in der Schließstellung und offen in dem Abschnitt (13.1) mit dem mittleren Innendurchmesser in der Öffnungsstellung des Verschlusszapfens (3) befindet, wobei sich die Dichtung (33.1) mit dem größeren Durchmesser dichtend in dem Abschnitt (13.1) mit dem mittleren Innendurchmesser in der Schließstellung und offen in dem Abschnitt (13.3) mit dem größten Innendurchmesser in der Öffnungsstellung des Verschlusszapfens (3) befindet und wobei ein erster Verbindungskanal (14.1) zwischen Flüssigkeitsfilter (1) und Wärmetauscher oberhalb der Dichtung (33.1) mit dem größeren Durchmesser vom Ablasskanal (13) abgeht und ein zweiter Verbindungskanal (14.2) zwischen Wärmetauscher und Flüssigkeitsfilter (1) zwischen den beiden Dichtungen (33.1 und 33.2) in den Ablasskanal (13) mündet.

18. Flüssigkeitsfilter nach einem der Ansprüche 1 bis 17, **dadurch gekennzeichnet, dass** er aus dem Filtergehäuse (10) einerseits und einer vormontierten Baugruppe (6) andererseits bei seiner Erstmontage zusammenbaubar ist, wobei die vormontierte Baugruppe (6) den Verschlusszapfen (3), den Ventilkörperträger (40), die Feder (5), den Filtereinsatz (2) und den Deckel (11) umfasst.

19. Filtereinsatz (2), der mit einem Flüssigkeitsfilter (1) nach einem der Ansprüche 1 bis 18 zusammenwirkt, wobei der Filtereinsatz (2) aus einem stirnseitig von zwei Endscheiben (21 und 22) eingefassten hohlzylindrischen Filterstoffkörper (20) besteht, wobei die im Einbauzustand untere Endscheibe (21) eine zentrale Aufstecköffnung (21') zum Aufstecken des Filtereinsatzes (2) auf einen zentralen Ventilkörperträger (40) des Flüssigkeitsfilters (1) aufweist,
**dadurch gekennzeichnet,**
- **dass** Betätigungselemente (27) an dem Filtereinsatz (2) angeordnet oder mit dem Filtereinsatz (2) geführt sind, mittels welchen von dem Filtereinsatz (2) eine in Richtung zur Schließstellung eines Ablasskanalverschlusszapfens (3) des Flüssigkeitsfilters (1) wirkende Kraft unmittelbar auf Schubnasen (37) des Verschlusszapfens (3) ausübbar ist, und
- **dass** am Innenumfang des Filtereinsatzes (2) erste Positionierführungsmittel (25) angeordnet sind, die zum Zusammenwirken mit am Außenumfang des Ventilkörperträgers (40) angeordneten zweiten Positionierführungsmitteln (45) ausgebildet sind, wobei mit den Positionierführungsmitteln (25 und 45) der Filtereinsatz (2) bei seinem Aufstecken auf den Ventilkörperträger (40) in Umfangsrichtung in eine eingriffsgerechte Position seiner Betätigungselemente (27) relativ zu den Schubnasen (37) zwangsführbar ist.

20. Filtereinsatz nach Anspruch 19, **dadurch gekennzeichnet, dass** die Betätigungselemente (27) an der unteren Endscheibe (21) und/oder an einem zentralen Stützgitter (23) des Filtereinsatzes (2) angeordnet sind.

21. Filtereinsatz nach Anspruch 19 oder 20, **dadurch gekennzeichnet, dass** die Betätigungselemente (27) durch zwei oder mehr radial nach innen vorragende, axial verlaufende Rippen oder durch eine Zahnanordnung mit mehreren radial nach innen vorragenden, axial verlaufenden Zähnen gebildet sind.

22. Filtereinsatz nach einem der Ansprüche 19 bis 21, **dadurch gekennzeichnet, dass** die ersten Positionierführungsmittel (25) an der unteren Endscheibe (21) und/ oder an einem zentralen Stützgitter (23) des Filtereinsatzes (2) angeordnet sind.

23. Filtereinsatz nach einem der Ansprüche 19 bis 22, **dadurch gekennzeichnet, dass** die Betätigungselemente (27) für die Schubnasen (37) mit den am Filtereinsatz (2) vorgesehenen ersten Positionierführungsmitteln (25) identisch sind.

24. Filtereinsatz nach einem der Ansprüche 19 bis 22 **dadurch gekennzeichnet, dass** die Betätigungselemente (27) für die Schubnasen (37) einerseits und die am Filtereinsatz (2) vorgesehenen ersten Positionierführungsmittel (25) andererseits einzeln für sich ausgebildet sind.

## Claims

1. A liquid filter (1), particularly an oil filter for an internal combustion engine, having a filter housing (10) with a removable cover (11) and with a raw-liquid inlet and a pure-liquid outlet, having a replaceable filter insert (2) arranged in the filter housing (10) and separating a raw side from a pure side of the liquid filter (1), and having a hollow-cylindrical filter medium body (20) enclosed at its end faces by two end discs (21, 22), wherein the in the installed state lower end disc (21) has a central mounting opening (21'), wherein the liquid filter (1) has a filter bypass valve (4), for which the in the installed state upper end disc (22) has, on the underside, a central valve seat (24) which interacts with a valve body (44), wherein the filter housing (10) also has a central discharge duct (13) to drain the filter housing (10) when the filter insert (2) is removed, and wherein a closure pin (3) arranged in the discharge duct (13) is fixed with respect to the housing in the installed state and is axially adjustable between a closed position assumed when the filter insert (2) is installed and the cover (11) is closed, and an open position assumed when the cover (11) is open and the filter insert (2) has been removed, **characterised in that**
- a valve body carrier (40) which runs through the filter insert (2) is connected with limited axial displaceability to the closure pin (3) and has on its free end a valve body (44) of the filter bypass valve (4), and the filter insert (2) can be mounted onto the valve body carrier, with the end disc (21) thereof which has the mounting opening (21') being forward,
- the valve body carrier (40) is preloaded with the force of a spring (5) supported on the filter housing, which force acts in the closing direction of the filter bypass valve (4), and
- during, or during and after, the mounting of the filter insert (2) onto the valve body carrier (40), a force acting in the closing direction of the closure pin (3) can be exerted directly on the latter by the filter insert (2).

2. The liquid filter according to Claim 1, **characterised in that** the valve body carrier (40) and the valve body (44) of the filter bypass valve (4) are made in one piece.

3. The liquid filter according to Claim 1 or 2, **characterised in that** the closure pin (3) has in its upper end area two or more push lugs (37) distributed around the circumference and projecting radially outwards over the outer circumference of the valve body carrier (40), on which push lugs the thrust acting in the direction of the closed position of the closure pin (3) can be exerted by the filter insert (2).

4. The liquid filter according to one of Claims 1 to 3, **characterised in that** the closure pin (3) and the valve body carrier (40) are non-rotatable relative to one another.

5. The liquid filter according to Claim 3 or 4, **characterised in that** operating elements (27) for the push lugs (37) are arranged on the lower end disc (21) or on a support grid (23) of the filter insert (2).

6. The liquid filter according to Claim 5, **characterised in that** the operating elements (27) are formed by two or more radially inwardly projecting, axially running ribs or by a tooth arrangement with a number of radially inwardly projecting, axially running teeth.

7. The liquid filter according to Claim 5 or 6, **characterised in that** interacting positioning guide means (25 and 45) are arranged on the inner circumference of the filter insert (2) and on the outer circumference of the valve body carrier (40), whereby the filter insert (2) upon being mounted onto the valve body carrier (40) can be forcibly guided circumferentially into a position in which its operating elements (27) are suitably arranged for engagement relative to the push lugs (37).

8. The liquid filter according to Claim 7, **characterised in that** the operating elements (27) for the push lugs (37) are identical with the positioning guide means (25) provided on the filter insert (2).

9. The liquid filter according to one of Claims 1 to 8, **characterised in that** a helical compression spring surrounding the closure pin (3) is arranged as a spring (5) between the lower end of the valve body carrier (40) and the filter housing (10).

10. The liquid filter according to Claim 9, **characterised in that** several outwardly directed retaining cams (35) are provided on the outer circumference of the valve body carrier (40), which cams engage the spring (5) when it is relaxed and disengage from the spring (5) when it is at least partly compressed.

11. The liquid filter according to one of Claims 1 to 10, **characterised in that** a lower section of the valve body carrier (40) is guided for axial displacement in the filter housing (10) and that the displacement path of the valve body carrier (40) is limited in the direction of ejection relative to the filter housing (10) by a resilient locking lug arrangement (41).

12. The liquid filter according to one of Claims 1 to 11, **characterised in that** the cover (11), on its underside, and the upper end disc (22) of the filter insert (2), on its upper side, have interacting releasable first latching means (11.2 and 22.2) that are rotatable relative to one another, whereby a pre-definable first traction force can be axially transferred.

13. The liquid filter according to Claim 12, **characterised in that** the filter insert (2) on the one hand and the valve body carrier (40) or the closure pin (3) on the other have interacting, releasable second latching means (26 and 46), whereby a pre-definable second traction force that is smaller than the first traction force can be axially transferred.

14. The liquid filter according to one of Claims 1 to 13, **characterised in that** one or every seal (33; 33.1, 33.2) provided on the closure pin (3) is a radially acting seal, preferably a sealing ring, ideally an O-ring.

15. The liquid filter according to one of Claims 1 to 14, **characterised in that** the closure pin (3) has a radially acting seal (33) in the lower part thereof which interacts with the discharge duct (13), and that the discharge duct (13) has two sections (13.1 and 13.3) with different inner diameters that increase in stages from bottom to top in the area thereof which interacts with the seal (33) upon the axial movement of the closure pin (3), wherein the seal (33) is free in the section (13.3) with the larger inner diameter in the open position and it seals in the section (13.1) with the smaller inner diameter in the closed position of the closure pin (3).

16. The liquid filter according to one of Claims 1 to 14, **characterised in that** a heat exchanger for the liquid flowing through the liquid filter (1) is connected or connectable to the liquid filter (1), that the closure pin (3) has two axially spaced, radially acting seals (33.1 and 33.2) with different diameters in the lower part thereof which interacts with the discharge duct (13), and that the discharge duct (13) has two sections (13.1 and 13.2) with different inner diameters that increase in stages from bottom to top in the area thereof which interacts with the seals (33.1 and 33.2) upon the axial movement of the closure pin (3), wherein the seal (33.2) with the smaller diameter seals in the section (13.2) with the smaller inner diameter in the closed position of the closure pin (3) and it is open in the section (13.1) with the larger inner diameter in the open position of the closure pin (3), wherein the seal (33.1) with the larger diameter is always sealingly situated in the section (13.1) with the larger inner diameter, and wherein a first connecting duct (14.1) branches off from the discharge duct (13) between the liquid filter (1) and the heat exchanger, above the seal (33.1) with the larger diameter, and a second connecting duct (14.2), between the heat exchanger and the liquid filter (1), opens into the discharge duct (13) between the two seals (33.1.and 33.2).

17. The liquid filter according to one of Claims 1 to 14, **characterised in that** a heat exchanger for the liquid flowing through the liquid filter (1) is connected or connectable to the liquid filter (1), that the closure pin (3) has two axially spaced, radially acting seals (33.1 and 33.2) with different diameters in the lower part thereof which interacts with the discharge duct (13), and that the discharge duct (13) has three sections (13.1, 13.2 and 13.3) with different inner diameters that increase in stages from bottom to top in the area thereof which interacts with the seals (33.1 and 33.2) upon the axial movement of the closure pin (3), wherein the seal (33.2) with the smaller diameter seals in the section (13.2) with the smallest inner diameter in the closed position and it is open in the section (13.1) with the medium inner diameter in the open position of the closure pin (3), wherein the seal (33.1) with the larger diameter is sealingly situated in the section (13.1) with the medium inner diameter in the closed position and it is open in the section (13.3) with the largest diameter in the open position of the closure pin (3), and wherein a first connecting duct (14.1) between the liquid filter (1) and the heat exchanger branches off from the discharge duct (13) above the seal (33.1) with the larger diameter, and a second connecting duct (14.2) between the heat exchanger and the liquid filter (1) opens into the discharge duct (13) between the two seals (33.1.and 33.2).

18. The liquid filter according to one of Claims 1 to 17, **characterised in that** in its initial mounting it can be assembled from the filter housing (10) on the one hand and a pre-assembled component group (6) on the other hand, wherein the pre-assembled component group (6) includes the closure pin (3), the valve body carrier (40), the spring (5), the filter insert (2) and the cover (11).

19. A filter insert (2) interacting with a liquid filter (1) according to one of Claims 1 to 18, wherein the filter insert (2) comprises a hollow-cylindrical filter medium body (20) enclosed on the end faces by two end discs (21 and 22), wherein the in the installed state lower end disc (21) has a central mounting opening (21'), for mounting the filter insert (2) onto a central valve body carrier (40) of the liquid filter (1),
**characterised in that**
- operating elements (27) are arranged on the filter insert (2) or guided with the filter insert (2), by means of which a force acting in the direction of the closing position of a discharge duct closure pin (3) of the liquid filter (1) can be exerted directly on push lugs (37) of the closure pin (3), and
- first positioning guide means (25) are arranged on the inner circumference of the filter insert (2) and designed to interact with second positioning guide means (45) arranged on the outer circumference of the valve body carrier (40), whereby the filter insert (2) upon being mounted onto the valve body carrier (40) can be forcibly guided circumferentially by the positioning guide means (25 and 45) into a position in which its operating elements (27) are suitably arranged for engagement relative to the push lugs (37).

20. The filter insert according to Claim 19, **characterised in that** the operating elements (27) are arranged on the lower end disc (21) and/or on a central support grid (23) of the filter insert (2).

21. The filter insert according to Claim 19 or 20, **characterised in that** the operating elements (27) are formed by two or more radially inwardly projecting, axially running ribs or by a tooth arrangement with several radially inwardly projecting, axially running teeth.

22. The filter insert according to one of Claims 19 to 21, **characterised in that** the first positioning guide means (25) are arranged on the lower end disc (21) and/or on a central support grid (23) of the filter insert (2).

23. The filter insert according to one of Claims 19 to 22, **characterised in that** the operating elements (27) for the push lugs (37) are identical with the first positioning guide means (25) provided on the filter insert (2).

24. The filter insert according to one of Claims 19 to 22, **characterised in that** the operating elements (27) for the push lugs (37) on the one hand and the first positioning guide means (25) provided on the filter insert (2) on the other hand are formed individually.

## Revendications

1. Filtre à liquide (1), notamment filtre à huile d'un moteur à combustion interne, pourvu d'un carter de filtre (10) doté d'un couvercle amovible (11), d'une admission de liquide brut et d'une sortie de liquide pur, avec un élément filtrant (2) agencé dans le carter de filtre (10) de manière interchangeable et séparant l'une de l'autre une face brute et une face pure du filtre à liquide (1), doté d'un corps en matériau filtrant (20) de la forme d'un cylindre creux encastré à l'avant par deux plaques d'extrémité (21, 22), la plaque d'extrémité inférieure (21) présentant, une fois montée, un orifice d'emboîtement central (21'), le filtre à liquide (1) présentant une soupape de contournement de filtre (4) pour laquelle la plaque d'extrémité supérieure (22), une fois montée, présente en sa face inférieure un siège de soupape (24) central coopérant avec un corps de soupape (44), le carter de filtre (10) présentant de plus un canal d'évacuation central (13) pour vidanger le carter de filtre (10) lorsque l'élément filtrant (2) est retiré et un tenon de fermeture (3), solidaire au carter une fois monté, étant agencé dans le canal d'évacuation (13), ledit tenon de fermeture pouvant être réglé axialement d'une position de fermeture prise lorsque l'élément filtrant (2) est monté et que le couvercle (11) est fermé, à une position d'ouverture prise lorsque le couvercle (11) est enlevé et que l'élément filtrant (2) est retiré, **caractérisé en ce**
- **qu'**un support du corps de soupape (40) s'étendant à travers l'élément filtrant est relié au tenon de fermeture (3) de manière déplaçable limitée dans l'axe, ledit support présentant en son extrémité libre un corps de soupape (44) de la soupape de contournement de filtre (4) et l'élément filtrant (2) pouvant être emboîté sur ledit support avec en avant sa plaque d'extrémité (21) présentant l'orifice d'emboîtement (21'),
- **que** le support de corps de soupape (40) est sollicité par une force d'un ressort (5) appuyé sur le carter de filtre, ladite force s'appliquant dans le sens de fermeture de la soupape de contournement de filtre (4) et
- **que** par l'élément filtrant (2) lors de ou lors de et après son emboîtement sur le support de corps de soupape (40), une force peut être exercée directement sur le tenon de fermeture (3), ladite force s'appliquant dans la direction de la position de fermeture du tenon de fermeture (3).

2. Filtre à liquide selon la revendication 1, **caractérisé en ce que** le support de corps de soupape (40) et le corps de soupape (44) de la soupape de contournement de filtre (4) sont conçus d'un seul tenant.

3. Filtre à liquide selon la revendication 1 ou 2, **caractérisé en ce que** le tenon de fermeture (3) présente en sa zone d'extrémité supérieure au moins deux nez de poussée (37) répartis sur la circonférence et saillants radialement vers l'extérieur par rapport à la circonférence extérieure du support de corps de soupape (40), sur lesquels peut être exercé par l'élément filtrant (2) l'effort de cisaillement qui s'applique dans la direction de la position de fermeture du tenon de fermeture (3).

4. Filtre à liquide selon l'une quelconque des revendications 1 à 3, **caractérisé en ce que** le tenon de fermeture (3) et le support de corps de soupape (40) sont non rotatifs l'un par rapport à l'autre.

5. Filtre à liquide selon la revendication 3 ou 4, **caractérisé en ce que** des éléments d'actionnement (27) pour les nez de poussée (37) sont agencés sur la plaque d'extrémité inférieure (21) ou sur une grille support (23) de l'élément filtrant (2).

6. Filtre à liquide selon la revendication 5, **caractérisé en ce que** les éléments d'actionnement (27) sont formés par au moins deux nervures s'étendant dans l'axe, en saillie radiale vers l'intérieur, ou par un ensemble de dents pourvu de plusieurs dents s'étendant dans l'axe, en saillie radiale vers l'intérieur.

7. Filtre à liquide selon la revendication 5 ou 6, **caractérisé en ce que** sont agencés sur la circonférence intérieure de l'élément filtrant (2) et sur la circonférence extérieure du support de corps de soupape (40) des moyens de guidage en position (25 et 45) coopérants qui permettent de contraindre l'élément filtrant (2), lors de son emboîtement sur le support de corps de soupape (40) dans la direction de la circonférence, à prendre une position telle que ses éléments d'actionnement (27) entrent en interaction avec les nez de poussée (37).

8. Filtre à liquide selon la revendication 7, **caractérisé en ce que** les éléments d'actionnement (27) pour les nez de poussée (37) sont identiques aux moyens de guidage en position (25) prévus sur l'élément filtrant (2).

9. Filtre à liquide selon l'une quelconque des revendications 1 à 8, **caractérisé en ce qu'**un ressort hélicoïdal de compression entourant le tenon de fermeture (3) est agencé sous la forme d'un ressort (5) entre l'extrémité inférieure du support de corps de soupape (40) et le carter de filtre (10).

10. Filtre à liquide selon la revendication 9, **caractérisé en ce que** sont prévus sur la circonférence extérieure du support de corps de soupape (40) plusieurs ergots de retenue (35) orientés vers l'extérieur, lesquels sont, lorsque le ressort (5) est détendu, en interaction avec celui-ci et ne le sont pas lorsque le ressort (5) est au moins partiellement compressé.

11. Filtre à liquide selon l'une quelconque des revendications 1 à 10, **caractérisé en ce que** le support de corps de soupape (40) est déplaçable de manière axiale dans le carter de filtre (10) en une portion inférieure, et que la trajectoire de déplacement du support de corps de soupape (40) est limitée par un ensemble élastique de nez de verrouillage (41) dans le sens de sortie par rapport au carter de filtre (10).

12. Filtre à liquide selon l'une quelconque des revendications 1 à 11, **caractérisé en ce que** le couvercle (11) présente sur sa face inférieure et la plaque d'extrémité supérieure (22) de l'élément filtrant (2), elle, sur sa face supérieure, des premiers moyens de liaison d'encliquetage (11.2 et 22.2) détachables, rotatifs les uns par rapport aux autres et coopérant les uns avec les autres, qui permettent de transmettre dans le sens axial une première force de traction prédéfinissable.

13. Filtre à liquide selon la revendication 12, **caractérisé en ce que** l'élément filtrant (2) d'une part et le support de corps de soupape (40) ou le tenon de fermeture (3) d'autre part présentent des moyens de liaison d'encliquetage (26 et 46) détachables et coopérant les uns avec les autres, qui permettent de transmettre dans le sens axial une deuxième force de traction prédéfinissable inférieure à la première force de traction.

14. Filtre à liquide selon l'une quelconque des revendications 1 à 13, **caractérisé en ce qu'**un joint ou chaque joint (33: 33.1, 33.2) prévu sur le tenon de fermeture (3) est un joint assurant radialement l'étanchéité, de préférence une bague d'étanchéité, de plus de préférence un joint torique.

15. Filtre à liquide selon l'une quelconque des revendications 1 à 14, **caractérisé en ce que** le tenon de fermeture (3) présente en sa partie inférieure coopérant avec le canal d'évacuation (13) un joint assurant radialement l'étanchéité (33), et que le canal d'évacuation (13) a, dans sa partie coopérant avec le joint (33) lors du mouvement axial du tenon de fermeture (3), deux tronçons (13.1 et 13.3) de diamètre intérieur différent croissant par palier du bas vers le haut, le joint (33) se trouvant libre dans le tronçon (13.3) de plus grand diamètre intérieur en position d'ouverture, et assurant l'étanchéité dans le tronçon (13.1) de diamètre intérieur plus petit en position de fermeture du tenon de fermeture (3).

16. Filtre à liquide selon l'une quelconque des revendications 1 à 14, **caractérisé en ce qu'**un échangeur de chaleur est relié ou peut être relié au filtre à liquide (1) pour le liquide traversant le filtre à liquide (1), que le tenon de fermeture (3) présente en sa partie inférieure coopérant avec le canal d'évacuation (13), deux joints (33.1 et 33.2) assurant radialement l'étanchéité, espacés de manière axiale et de diamètre différent, et que le canal d'évacuation (13) a, dans sa zone coopérant avec les joints (33.1 et 33.2) lors du déplacement axial du tenon de fermeture (3), deux tronçons (13.1 et 13.2) de diamètre intérieur différent croissant par palier du bas vers le haut, le joint (33.2) de diamètre réduit assurant l'étanchéité dans le tronçon (13.2) de diamètre intérieur réduit en position de fermeture et se trouvant ouvert dans le tronçon (13.1) de diamètre intérieur supérieur en position d'ouverture du tenon de fermeture (3), le joint (33.1) de diamètre supérieur assurant toujours l'étanchéité dans le tronçon (13.1) de diamètre intérieur supérieur, et un premier canal de liaison (14.1) partant du canal d'évacuation (13) entre le filtre à liquide (1) et l'échangeur de chaleur au-dessus du joint (33.1) de diamètre supérieur, et un deuxième canal de liaison (14.2) débouchant entre les deux joints (33.1 et 33.2) dans le canal d'évacuation (13) entre l'échangeur de chaleur et le filtre à liquide (1).

17. Filtre à liquide selon l'une quelconque des revendications 1 à 14, **caractérisé en ce qu'**un échangeur de chaleur est relié ou peut être relié au filtre à liquide (1) pour le liquide traversant le filtre à liquide (1), que le tenon de fermeture (3) présente en sa partie inférieure coopérant avec le canal d'évacuation (13), deux joints (33.1 et 33.2) assurant radialement l'étanchéité, espacés de manière axiale et de diamètre différent, et que le canal d'évacuation (13) a, dans sa zone coopérant avec les joints (33.1 et 33.2) lors du déplacement axial du tenon de fermeture (3), trois tronçons (13.1, 13.2 et 13.3) de diamètre intérieur différent croissant par palier du bas vers le haut, le joint (33.2) de diamètre réduit assurant l'étanchéité dans le tronçon (13.2) de plus petit diamètre intérieur en position de fermeture et se trouvant ouvert dans le tronçon (13.1) de diamètre intérieur moyen en position d'ouverture du tenon de fermeture (3), le joint (33.1) de diamètre supérieur assurant l'étanchéité dans le tronçon (13.1) de diamètre intérieur moyen en position de fermeture et se trouvant ouvert dans le tronçon (13.3) de plus grand diamètre intérieur en position d'ouverture du tenon de fermeture (3), et un premier canal de liaison (14.1) partant du canal d'évacuation (13) entre le filtre à liquide (1) et l'échangeur de chaleur au-dessus du joint (33.1) de diamètre supérieur, et un deuxième canal de liaison (14.2) débouchant entre les deux joints (33.1 et 33.2) dans le canal d'évacuation (13) entre l'échangeur de chaleur et le filtre à liquide (1).

18. Filtre à liquide selon l'une quelconque des revendications 1 à 17, **caractérisé en ce qu'**il peut être assemblé, quand il est monté pour la première fois, à partir du carter de filtre (10) d'une part, et d'un module prémonté (6) d'autre part, ledit module prémonté (6) comprenant le tenon de fermeture (3), le support de corps de soupape (40), le ressort (5), l'élément filtrant (2) et le couvercle (11).

19. Élément filtrant (2) coopérant avec un filtre à liquide (1) selon l'une quelconque des revendications 1 à 18, l'élément filtrant (2) étant constitué d'un corps en matériau filtrant (20) de forme cylindrique creuse et encastré à l'avant par deux plaques d'extrémité (21 et 22), la plaque d'extrémité inférieure (21) présentant, une fois montée, un orifice d'emboîtement central (21') pour emboîter l'élément filtrant (2) sur un support de corps de soupape (40) central du filtre à liquide (1),
**caractérisé en ce**
- **que** des éléments d'actionnement (27) sont agencés sur l'élément filtrant (2) ou sont avec l'élément filtrant (2), au moyen desquels une force peut être exercée directement sur des nez de poussée (37) du tenon de fermeture (3), ladite force s'appliquant dans le sens de la position de fermeture d'un tenon de fermeture du canal d'évacuation (3) du filtre à liquide (1), et
- **que** sont agencés des premiers moyens de guidage en position (25) sur la circonférence intérieure de l'élément filtrant (2), lesquels sont conçus pour coopérer avec des deuxièmes moyens de guidage en position (45) agencés sur la circonférence extérieure du support de corps de soupape (40), l'élément filtrant (2) pouvant être contraint, lors de son emboîtement sur le support du corps de soupape (40) dans la direction de circonférence, à prendre une position telle que ses éléments d'actionnement (27) entrent en interaction avec les nez de poussée (37).

20. Élément filtrant selon la revendication 19, **caractérisé en ce que** les éléments d'actionnement (27) sont agencés sur la plaque d'extrémité inférieure (21) et/ou sur une grille support centrale (23) de l'élément filtrant (2).

21. Élément filtrant selon la revendication 19 ou 20, **caractérisé en ce que** les éléments d'actionnement (27) sont formés par au moins deux nervures s'étendant dans l'axe, en saillie radiale vers l'intérieur, ou par un ensemble de dents pourvu de plusieurs dents s'étendant dans l'axe, en saillie radiale vers l'intérieur.

22. Élément filtrant selon l'une quelconque des revendications 19 à 21, **caractérisé en ce que** les premiers moyens de guidage en position (25) sont agencés sur la plaque d'extrémité inférieure (21) et/ou sur une grille support centrale (23) de l'élément filtrant (2).

23. Élément filtrant selon l'une quelconque des revendications 19 à 22, **caractérisé en ce que** les éléments d'actionnement (27) pour les nez de poussée (37) sont identiques aux premiers moyens de guidage en position (25) prévus sur l'élément filtrant (2).

24. Élément filtrant selon l'une quelconque des revendications 19 à 22, **caractérisé en ce que** les éléments d'actionnement (27) pour les nez de poussée (37) d'une part et les premiers moyens de guidage en position (25) prévus sur l'élément filtrant (2) d'autre part sont conçus chacun pour soi.
